# EUROPÄISCHE PATENTANMELDUNG

(11) **EP 4 610 040 A1**
(43) Veröffentlichungstag der Anmeldung: **03.09.2025**
(21) Anmeldenummer: 24160708.4
(22) Anmeldetag: 29.02.2024
(51) Int. Cl.: B32B 1/08, B32B 3/06, B32B 5/02, B32B 7/027, B32B 7/10, B32B 7/12, B32B 27/12, F16L 55/165

(54) **SCHLAUCHLINER**

(71) Anmelder: InnoVance GmbH, 10719 Berlin (DE)
(72) Erfinder: BUJOK, Oliver, 14109 Berlin (DE)
(74) Vertreter: Simandi, Claus

(57) **Zusammenfassung**

Die vorliegende Erfindung betrifft einen mehrschichtigen Schlauchliner, der mindestens eine Schicht eines thermisch aktivierbaren schmelzklebenden Materials mit haftvermittelnden Eigenschaften aufweist, und zwar zwischen der Schlauchinnenfolie und einer Verstärkungslage, die ein Verstärkungsmaterial mit einem unter UV-/Licht-Strahlung aushärtbarem Reaktionsmaterial enthält, sodass sich die Schlauchinnenfolie im Zuge des Aushärtevorgangs untrennbar mit dem Verstärkungslage verbindet, und zur Außenfolie an der Kanalwand eine Einheit bildet.

## Beschreibung

Die vorliegende Erfindung betrifft einen mehrschichtigen Schlauchliner, der mindestens eine Schicht eines thermisch aktivierbaren schmelzklebenden Materials mit haftvermittelnden Eigenschaften aufweist, und zwar zwischen der Schlauchinnenfolie und einer Verstärkungslage, die ein Verstärkungsmaterial mit einem unter UV-/Licht-Strahlung aushärtbarem Reaktionsmaterial enthält, sodass sich die Schlauchinnenfolie im Zuge des Aushärtevorgangs untrennbar mit der Verstärkungslage verbindet und zur Außenfolie an der Kanalwand eine feste und dichte Einheit bildet.

Ein Schlauchliner ist ein flexibles Rohrsystem, das in der grabenlosen Kanalsanierung verwendet wird. Es handelt sich um einen speziellen Liner, der zumeist in beschädigte oder veraltete Rohre eingeführt wird, um diese zu verstärken oder zu reparieren, ohne dass eine vollständige Entfernung oder Austausch des Rohrs erforderlich ist.

Der Schlauchliner besteht typischerweise aus einem flexiblen Kunststoffmaterial wie Polyesterharz, Vinylesterharz oder Epoxidharz, das vorzugsweise mit Glasfasern verstärkt ist. Der Liner wird in das beschädigte Rohr eingeführt und mit Druckluft oder Wasser aufgeblasen, um ihn an die Innenwand des Rohrs anzupassen. Dann härtet zumeist ein Harz aus und bildet eine dauerhafte und nahtlose Auskleidung, die die Struktur des ursprünglichen Rohrs verstärkt und undichte Stellen abdichtet.

Schlauchliner werden häufig in der Sanierung von Kanalisationssystemen eingesetzt, da sie eine kostengünstige und weniger invasive Alternative zum Austausch von Rohren darstellen. Sie können dazu beitragen, den Betrieb von Abwassersystemen aufrechtzuerhalten, die Lebensdauer von Rohren zu verlängern und Umweltbelastungen durch undichte Abwasserleitungen zu reduzieren.

EP 3 174 703 B1 beschreibt eine gattungsgemäße schlauchförmige Innenfolie, die in einem Auskleidungsschlauch mit einer aufgebrachten aushärtbaren Lage aus mindestens einem mit einem photochemisch härtbaren Harz getränkten Faserschlauch in Berührung steht.

Aus der DE 10 2011 105 995 sind Auskleidungsschläuche zur Sanierung von fluidführenden Systemen mit
- mindestens einem inneren Folienschlauch auf der Basis eines thermoplastischen Kunststoffs,
- mindestens einem äußeren Folienschlauch auf der Basis eines thermoplastischen Kunststoffs und mindestens einem mit einem photochemisch härtbaren Harz getränkten Faserschlauch zwischen mindestens einem inneren und mindestens einem äußeren Folienschlauch,
- wobei mindestens ein innerer Folienschlauch, der mit mindestens einem mit einem photochemisch härtbaren Harz getränkten Faserschlauch in Berührung steht, auf der im eingebauten Zustand dem Faserschlauch zugewandten Oberfläche funktionelle Gruppen aufweist, die eine Reaktion mit dem Faserschlauch eingehen,
   bekannt.

Allerdings wird im zitierten Stand der Technik die Innenfolie lediglich funktionalisiert, so dass eine Reaktion mit dem Faserschlauch erfolgen kann.

Nachteilig bei den oben beschriebenen Auskleidungsschläuchen ist die Tatsache, dass funktionelle Gruppen an der zum Harz gerichteten Außenschicht bei dem inneren Folienschlauch alleine nicht ausreichen, um eine wirksame Anbindung der Schlauch(innen)folie an die harzgetränkten Faserbänder oder an das harzgetränkte Fasermaterial zu gewährleisten.

Weiterhin sind im Stand der Technik mehrschichtige Schlauchliner beschrieben, wie z.B. in der DE 10 2010 023 764 B4, welche zudem Haftvermittler aufweisen können. Jedoch ist nachteilig, dass gemäß [0054] der innenliegende Schlauch abgezogen werden muss. Dies ist mit der vorliegenden erfindungsgemäßen technischen Lehre nicht mehr erforderlich, da eine hinreichende Fixierung erfolgt.

Es war daher Aufgabe der vorliegenden Erfindung, einen verbesserten mehrschichtigen Schlauchliner bereitzustellen, der nach Aushärtung eine bessere Haftung der Schichten erlaubt und ferner verbesserte Festigkeitseigenschaften und verbesserte Dichteigenschaften aufweist, wobei insbesondere ein Abziehen des Innenschlauchs nicht erforderlich ist.

Die Aufgabe wird gemäß der technischen Lehre nach mindestens einem der Ansprüche gelöst.

Die Erfinder haben im Rahmen dieser Erfindung festgestellt, dass es in besonderem Maße auf den Schmelzpunkt und das Fließverhalten der Schmelze der mindestens einen Schicht aus einem thermisch aktivierbaren, schmelzklebenden Material ankommt. Daher ist das erfindungsgemäß verwendete thermisch aktivierbare, schmelzklebende Material, das haftvermittelnde Eigenschaften hat, maßgeschneidert auf die Aushärtebedingungen im Zuge der Installation des Schlauchliners eingestellt, was insbesondere dessen Schmelzpunkt, Erweichungspunkt und Schmelzfluss betrifft, unter Berücksichtigung der bei der Aushärtung des Harzes eintretenden Temperaturerhöhungen bzw. auftretenden Temperaturen.

Der erfindungsgemäße Schlauchliner eignet sich daher vor allem zur Sanierung druckbelasteter Leitungssysteme, die bei einem Druck betrieben werden, der über atmosphärischem Druck liegt, zum Transport fluider oder gasförmiger Medien, wobei die Innenfolie vorzugsweise eine Mehrschichtverbundfolie ist, die eine Folienstärke von 20 bis 5.000 µm, bevorzugt von 50 bis 2.000 µm aufweist. Der vorteilhafte nahtlose innere Folienschlauch steht also in Kontakt mit der aushärtbaren Lage und verbindet sich mit dieser im Zuge der Aushärtung im Rahmen der Installation des Schlauchliners zur Erzeugung des sanierten Kanalabschnitts.

Dieser Kontakt kann mittelbar sein, und soll im Rahmen der vorliegenden Erfindung dahingehend verstanden werden, dass der Kontakt auch über zwischengeschaltete weitere Schichten erfolgen kann, die einerseits den Innenfolienschlauch anbinden und andererseits selbst an die harzgetränkte Verstärkungslage gebunden sind. Hier ist die Rede vorzugsweise von Nonwoven oder generell von für Harz und Flüssigkeiten saugfähigen Materialien.

Erfindungsgemäß hat die Schlauchinnenfolie auf ihrer Außenseite, die in Richtung der Kanalwand weist, mindestens eine Schicht eines thermisch aktivierbaren, schmelzklebenden Materials mit haftvermittelnden Eigenschaften. Dabei kommt es erfindungsgemäß auf den Schmelzpunkt und/oder auf den Schmelzfluss (Schmelzviskosität, Melt Flow Index MFI oder die Melt Flow Rate MFR) dieses Materials an.

In einer weiteren bevorzugten Ausführungsform kommt es bei dem thermisch aktivierbaren, schmelzklebenden Material mit haftvermittelnden Eigenschaften auf dessen Vicat-Erweichungstemperatur an, welche gemäß DIN EN ISO 306 / ASTM D1525 bestimmt wird, die erfindungsgemäß unter 100°C liegen sollte, insbesondere 20 bis unter 100°C, bevorzugt 30 bis 90°C und besonders bevorzugt zwischen 35 bis 80°C.

Solche Materialien mit einer Vicat-Erweichungstemperatur von kleiner 100°C sind erfindungsgemäß nicht abschließend umfasst (in Klammern steht die jeweilige Vicat-Erweichungstemperatur gemäß DIN EN ISO 306 / ASTM D1525):
(Reaktive) Ethylen-Acrylat-Maleinsäureanhydrid-Terpolymere wie Lotader: 3430 (45°C), 6200 (66°C), TX8030 (65°C), HX8290 (< 40°C) und 4513T (41°C), (reaktive) Ethylen-Acrylat-Glycidylmethacrylat Terpolymere wie Lotader: AX8670T (43°C), AX8750 (< 40°C) oder AX 8930 (< 40°C), (reaktive) Ethylen-Vinylacetat-Maleinsäureanhydrid Terpolymere wie Orevac T: 9304 (49°C), 9307Y (66°C) oder 9318 (54°C). Geeignet sind ebenfalls grafted Orevac-Typen (bzw. gepfropfte Orevac-Typen) wie 18211 (51°C), 18603 (< 40°C), 18302N (84°C) oder 18341 (95°C), wobei Ethylen-Vinylacetat-Copolymere (EVA), Ethylen Butylacrylat (EBA), Ethylmethacrylat (EMA), Polyethylen (wie LLDPE, LDPE, VLDPE) verwendet werden.

Geeignet sind ebenfalls Ethylen-Acrylat-Copolymere wie Lotryl: 18MA02 (53°C), 28MA07 (< 40°C), 30BA02 (41°C), 24MA07T (49°C) oder 35BA40T (< 40°C).

Weiterhin können Ethylen-Vinylacetat Copolymere wie Evatane: 18-500 (43°C), 28-03 (41°C) oder 33-45 PV (< 40°C).verwendet werden.

Vorgenannte Materialien werden z.B. von SK Functional Polymer handelsüblich zur Verfügung gestellt.

Von der Firma Mitsui vertriebene geeignete Materialien mit einer Vicat-Erweichungstemperatur unter 100°C sind auf Basis von Polyethylen (LLDPE) Admer NF 528 E (69°C), CE518E (80°C) oder NF837E (82°C), NF911E (74°C) oder AT1955E (62°C) oder SF730E (54°C).

In Frage kommen ferner Materialien wie etwa (Ethylen)Acrylharze Dow Bynel 2022 (58°C) oder Yparex^{®} 0H247 (47°C).

Im Stand der Technik wird lediglich in der DE 10 2010 023 764 B4 die Vicat-Erweichungstemperatur als Größe erkannt, jedoch ausschließlich für den Außenschlauch (a) und mit der ausdrücklichen Empfehlung, dass die Vicat-Erweichungstemperatur über 100°C liegen sollte.

In einer weiteren bevorzugten Ausführungsform der Erfindung hat es sich als vorteilhaft erwiesen, eine Vorbehandlung zur Erhöhung der Oberflächenspannung dieser reaktiven Schicht der Schlauchfolie vorzunehmen. Geeignete Verfahren und Methoden zur Vorbehandlung sind dem Fachmann bekannt: Diese kann zum Beispiel mit einer Corona-Vorbehandlung, Plasma-Vorbehandlung oder einer Flammvorbehandlung (einseitig) erfolgen.

Diese Maßnahme kann nochmals zu einer deutlich verbesserten Haftung der Schlauchfolie mit der erfindungsgemäßen reaktiven Schicht samt der Verstärkungslage führen.

Schmelzklebstoffe, auch Heißklebestoffe, Heißkleber, Hotmelt sind lösungsmittel- bzw. wasserfreie und bei Raumtemperatur mehr oder weniger feste Produkte, die im heißen Zustand als viskose Flüssigkeit vorliegen und auf die Klebefläche aufgetragen werden. Beim Abkühlen verfestigen sie sich irreversibel und stellen eine feste Verbindung her. Diese Gruppe von Klebstoffen umfassen thermoplastische Polymere, die auf verschiedenen chemischen Rohstoffen basieren.

Solche als Schmelzklebstoffe oder Hotmelt-Materialien verwendeten Polymere sind auch oder insbesondere (co-)extrudierbar. Daher ist es möglich, eine Schlauchinnenfolie bereitzustellen, an deren Außenseite mindestens eine erfindungsgemäße Schicht aus einem Schmelzklebstoff als thermisch aktivierbares, schmelzklebendes Material angebracht ist. Eine erfindungsgemäße ideale Schlauchfolie hat beispielsweise den folgenden Aufbau (von der Innenseite des Schlauches hin zur Außenseite): Polyamid oder ein Copolyamid, mindestens ggfs. ein Haftvermittler und mindestens ein Schmelzklebstoff.

Die erfindungsgemäß geeigneten Schmelzklebstoffe lassen sich in physikalisch und chemisch abbindende Klebstoffe unterteilen. Die physikalisch abbindenden Klebstoffe sind Thermoplaste, die chemisch abbindenden Klebstoffe bilden Duroplaste, d. h. dreidimensionale Netzwerke. Weiterhin werden die Schmelzklebstoffe in amorphe Polymere, teilkristalline Polymere, hochmolekulare Polymere eingeteilt, wobei bei den beiden ersten die Glastemperatur oberhalb der Raumtemperatur und bei letzterem die Glastemperatur unterhalb der Raumtemperatur liegt.

Die erfindungsgemäß geeigneten physikalisch abbindenden Schmelzklebstoffe eingesetzten Polymere sind nicht abschließend Polyamidharze, gesättigte Polyester, Ethylen-VinylacetatCopolymerisate (EVA), Polyolefine, Polyolefin-co-polymere, Blockcopolymere (StyrolButadien-Styrol oder Styrol-Isopren-Styrol) und Polyimide. Polyamide, Polyester und Polyimide werden in so genannten Hochleistungs-Schmelzklebstoffen, Ethylen-Vinylacetat-Copolymere und Polyolefine in so genannten Massen-Schmelzklebstoffen verwendet. Insbesondere und besonders bevorzugt kommen als für diese Erfindung geeignete heißschmelzklebende Materialien solche Polymere in Frage, die generell auch als sogenannte "Haftvermittler" bezeichnet werden.

Die eigentlichen Eigenschaften der Klebschicht in Bezug auf Adhäsion, Kohäsion und Temperaturverhalten werden von den Basispolymeren bestimmt, wobei zur Gewährleistung der Funktionalität oder zur Erzielung weiterer spezieller Eigenschaften oftmals verschiedene Zusätze benötigt werden. Harze dienen der Erhöhung der Klebrigkeit der Schmelze bei Verarbeitungstemperatur. Langkettige (Dibutyl- oder Nonyl-) Phthalsäureester dienen als Weichmacher für nicht ausreichend flexible Polymere. Aromatische Amine oder Phenole dienen als Stabilisatoren oder Antioxidantien während der Verarbeitung der Schmelze unter Sauerstoffeinfluss. Kreide, Schwerspat oder Titandioxid dienen der Festigkeitserhöhung und als Streckmittel zur Kostenreduzierung und Wachse dienen als Viskositätsregulanzien.

Haftvermittler, auch Primer genannt, im Sinne dieser Erfindung sind Substanzen, die in der Grenzfläche unmischbarer Stoffe eine enge physikalische oder meist chemische Bindung herstellen. Die erfindungsgemäßen Haftvermittler verbessern die Haftung von Verklebungen und Beschichtungen auf dem Untergrund.

Die Haftfestigkeit von Beschichtungen ist definiert als Maß für den Widerstand einer Beschichtung gegen ihre mechanische Trennung vom Untergrund, ihre Prüfung ist in einer Vielzahl von DIN- und ISO-Normen standardisiert. Durch Erhöhung der Haftfestigkeit wird allgemein eine verbesserte Resistenz gegen Wasser, Chemikalien und klimatische Einflüsse sowie ein verbesserter Korrosionsschutz erreicht. Aufgrund der Vielzahl der verschiedenen Verbundsysteme wird heute eine breite Palette von Stoffen für die Haftvermittlung eingesetzt. Technisch besonders wichtige Haftvermittler sind organisch funktionalisierte Silane (Silanhaftvermittler) und andere metallorganische Verbindungen, insbesondere Titanate und Zirkonate, außerdem verschiedene Polymere wie Polyester und Polyethylenimin.

Die häufigsten eingesetzten Haftvermittler für Kunststoffe sind modifizierte Polyolefine. Meistens wird dazu ein Polyolefin so modifiziert, dass dieses vorher unlösliche Polyolefin in organischen Lösungsmitteln löslich ist. Zur Modifikation wird hauptsächlich Chlor, Acryl und Maleinsäureanhydrid eingesetzt. Die polyolefinischen Haftvermittler selber reagieren meistens nicht mit dem Substrat, nur über das Maleinsäureanhydrid kann eine Reaktion erfolgen. Ein Haftvermittler ist daher in der Lage, insbesondere als Zwischenschicht, Schichten einer Kunststofffolie miteinander zu verbinden, auch wenn diese Schichten aus unterschiedlichen Materialien bestehen und sich diese ohne Haftvermittler nicht verbinden würden. Genannt seien nicht abschließend die Verbindung einer Polyethylen (PE)-Schicht mit einer Polyamid (PA)-Schicht bzw. einer Schicht aus Ethylen-Vinyl-Alkohol (EVOH), die sich ansonsten nicht mit der PE-Schicht der Folie verbinden würden, wenn keine HaftvermittlerSchicht dazwischen eingebracht wird.

Im Rahmen dieser Erfindung wird vorzugsweise auf den Schmelzpunkt bzw. auf die thermischen Eigenschaften des thermisch aktivierbaren, schmelzklebenden Materials abgestellt. Auch die Schmelzviskosität ist in Form des MFI oder der MFR bevorzugt zu beachten. Wie oben erläutert, ist eine haftvermittelnde Eigenschaft des Materials alleine nicht bevorzugt, es spielt das Schmelzverhalten und der Schmelzfluss (Schmelzviskosität) eine bevorzugte Rolle bei der erfindungsgemäßen Anwendung.

Weiterhin besonders bevorzugt ist im Rahmen dieser Erfindung die Vicat-Erweichungstemperatur der Schicht mit dem thermisch aktivierbarbaren, schmelzklebenden Material mit haftvermittelnden Eigenschaften, wobei die Vicat-Erweichungstemperatur gemäß DIN EN ISO 306 / ASTM D1525 bestimmt wird.

Typische Haftvermittler sind dem Fachmann im Kunststoffbereich bestens bekannt. Genannt seien an dieser Stelle nicht abschließend:
MODIC^{™} Haftvermittler von Mitsubishi Chemical Group sind säuregepfropfte Polyolefin-Compounds, welche die Haftung zwischen Materialien mit untereinander niedriger Affinität/Kompatibilität ermöglichen. Die Typen sind unter anderem auf PE, PP, EVOH, PA, PS, PET, PBT, PC, Metall und Glas abgestimmt und können in unterschiedlichen Prozessen verarbeitet werden.

ADMER^{™} von Mitsui Chemicals ist ein extrusionsfähiger Haftvermittler, welcher im Bereich der Blasfolienextrusion, Flachfolienextrusion, Blasformen etc. zum Einsatz kommt. Es stehen PE- und PP-basierende Typen zur Verfügung, abhängig vom Einsatz des Materials. Mit ADMER^{™} können Materialverbunde wie z.B. PP-EVOH-PP oder PE-PA-PE realisiert werden. ADMER^{™} haftet durch den Wirkstoff Maleinsäureanhydrid zu Materialien wie PA, EVOH, aber auch zu anderen Werkstoffen wie PS, PET, Aluminium etc.

LOTADER^{®} (und LOTADER^{®} T) Haftvermittler von der Firma SK Functional Polymer, TOUR CB21, 16 place de l'Iris, 92400 COURBEVOIE, Frankreich, die diese Produktklasse von Arkema gekauft hat. Das sind Ethylenterpolymere mit reaktiven Funktionen wie Maleinsäureanhydrid oder Epoxid (Glycidylmethacrylat). Hauptanwendungen:
- Coextrusionsbindemittel oder Verbindungsschichten in mehrschichtigen Strukturen für die Verpackungsindustrie, Rohrleitungsbeschichtung. Hervorragende Haftung auf vielen Substraten, selbst auf den schwierigsten, wie z. B. bedruckten Folien, bei der Extrusionslaminierung.
- Schlagzähmodifikator für technische Kunststoffe wie Polyamide und Polyester, die in der Elektronik- und Automobilbranche eingesetzt werden.
- Kompatibilisatoren für recycelte Kunststoffmischungen,
- Kopplungsmittel in HFFR-Kabeln für Kabel und Aluminiumplatten,
- Haftverstärker für Schmelzklebstoffe und Thermoklebefolien
- Schmelzklebstoffe (Hotmelts).

Orevac^{®}-Haftvermittler von SK Functional Polymer (vormals von Arkema) sind ebenfalls Polyolefine, die mit reaktivem Maleinsäureanhydrid gepfropft sind.

Maleinsäureanhydrid sorgt für Polarität und Reaktivität, was zu einer hohen Haftung auf verschiedenen Substraten wie PA, EVOH, PET und Aluminium führt. Der Gehalt an Maleinsäureanhydrid wurde in jeder Orevac^{®}-Sorte angepasst, um bei der Herstellung mehrschichtiger Strukturen verwendet zu werden, die die Leistungen von Polyolefin mit einem Sauerstoffbarrierematerial wie EVOH kombinieren, einem Produkt, das in der Verpackungsindustrie hochgeschätzt wird. Sie entwickeln auch eine Haftung auf polaren Materialien (Metall, Epoxidharz usw.) und Füllstoffen. Der Maleinsäureanhydridgehalt in den Orevac-Haftvermittlern wurde für den Einsatz als Haftvermittler in PP- und HFFR-Compounds optimiert. Orevac^{®} CA100 und Orevac^{®} 18341 sind die Typen, die jeweils in PP- und PE/EVA/EMA-Compounds verwendet werden, die Füllstoffe wie Talk, Glasfasern, Titandioxid usw. enthalten.

Gepfropfte Orevac^{®}-Eigenschaften:
Die Polyolefine basieren auf Polyethylen (PE), Ethylen-Vinylacetat-Copolymeren (EVA) oder Polypropylen (PP). Um ihre Reaktivität zu kontrollieren, werden sie mit unterschiedlichem Maleinsäureanhydrid gepfropft. Maleinsäureanhydrid ist nicht korrosiv, führt jedoch zu Reaktivität in der Polymerkette und kann mit Hydroxyl- (EVOH) und Amino- oder Amidgruppen (Polyamiden) reagieren. Orevac-Harze bestehen aus mehr als 20 verschiedenen Typen thermoplastischer Polymere, die dazu beitragen können, eine Vielzahl von Substraten miteinander zu verbinden.

Hauptanwendungen:
Verbindungsschichten in mehrschichtigen Kunststoff-Barrierefolien;
Haftvermittler für Verbindungen;
Recycling-Booster.
   - Verbindungsschicht in flexiblen und starren Verpackungen mit mehrschichtiger Barriere;
   - Haftvermittler in gefüllten Massen;
   - Kompatibilitätsmittel für Kunststoffmischungen, einschließlich recycelter Kunststoffe;
   - Schlagzähmodifikatoren;
   - Rohrbeschichtungsklebstoff.

Die reaktiven Polyolefine von Orevac^{®} verbinden sich mit Barrierepolymeren, insbesondere EVOH (Ethylen-Vinylalkohol-Copolymere) und Polyamiden PA. Es sind sowohl gebrauchsfertige als auch konzentrierte Orevac^{®}-Verbindungsschichten erhältlich. Orevac^{®}-Verbindungsschichten sind speziell für gängige Technologien wie Blasextrusion, Gussextrusion, aber auch für die Mehrblasen-Blasextrusion oder das MDO-Verfahren konzipiert.

BYNEL^{™}-Haftvermitter von Dow Inc. (vormals DuPont) bieten Herstellern und Verarbeitern leistungsstarke Lösungen für mehrschichtige Klebeanforderungen. Diese werden oft als Verbindungsschicht verwendet und sorgt für eine starke Verbindung zwischen unterschiedlichen Materialien in Flaschen, Tuben, thermoformbaren Platten, Folien und nicht verpackungsbezogenen Anwendungen wie Rohrleitungen und Bauplatten. Bynel bietet starke, flexible Zwischenschichthaftung.

BYNEL^{™}-Haftvermittler tragen zur Optimierung der Barriere-, Heißsiegel- und anderen Funktionen bei:
Coextrudierte Blas- und Gussfolie,
Extrusionsbeschichtung/Laminierung,
Gussblech,
Coex-Schläuche,
Blasformen.

Haftvermittler (oft auch "tie layer resins" TLR genannt) sind funktionalisierte Polyolefine, die durch Aufpfropfen von Anhydriden oder Säuren auf ein Polyolefinsubstrat in einem Nachreaktorprozess hergestellt werden. TLR sind entscheidend für die Verbindung unterschiedlicher Harze in mehrschichtigen Strukturen. Beispielsweise umfassen mehrschichtige Verpackungsstrukturen üblicherweise eine unpolare Polyolefinschicht und eine polare Barriereharzschicht, beispielsweise EVOH oder Polyamid PA. Durch eine Verbindungsschicht können die polaren und unpolaren Schichten aneinander haften. Die am häufigsten verwendeten Polyolefin-Grundmaterialien für die Herstellung von Verbindungsschichtharzen sind lineares Polyethylen niedriger Dichte (LLDPE), Polyethylen niedriger Dichte (LDPE), Polyethylen hoher Dichte (HDPE), Polypropylen (PP), Ethylvinylacetat (EVA) und Styrol-Ethylen-Butylen-Styrol (SEBS). Der für eine bestimmte Anwendung verwendete TLR-Typ wird auf der Grundlage von Faktoren wie Adhäsionseigenschaften und den zu verklebenden Substraten ausgewählt. Neue TLR auf Basis von Polyolefinen, die mit fortschrittlichen Ziegler-Natta- und Metallocen-Katalysatoren hergestellt werden, bieten einige Vorteile.

Flexible Verpackungen sind traditionell der größte Anwender von TLR, da Barriereharze zur Verbesserung der Haltbarkeit eingesetzt werden. Der größte TLR-Verbrauch entfällt beispielsweise auf Käse- und Fleischverpackungen. Typische starre Verpackungsanwendungen umfassen mehrschichtige Flaschen und Behälter. TLR werden auch in mehrschichtigen Gastanks in Automobilanwendungen eingesetzt. Zusätzlich zu mehrschichtigen Produkten werden TLR verwendet, um die Haftung zwischen unterschiedlichen Komponenten in Compoundierungsanwendungen wie Holz-Kunststoff-Verbundwerkstoffen, Nylonmodifikationen und Haftvermittlern für PP zu verbessern. Unternehmen in diesem Bereich führen Innovationen durch, um Eigenschaften in allen Aspekten zu verbessern, von den Grundmaterialien über die Verarbeitung bis hin zur Produktentwicklung. Neue Produkte können die höheren Temperaturen bewältigen, die für Retortenverpackungen und Heißabfüllanwendungen erforderlich sind. Führende Unternehmen in der Branche der Verbindungsschichtharze sind Dow (einschließlich früherer DuPont-Marken), LyondellBasell, Mitsui Chemicals, Arkema und Mitsubishi Chemical Performance Polymers.

Yparex^{®} ist ein extrudierbares Polymer von The Compound Company, Niederlande, das sich ideal für alle Arten von Mehrschichtanwendungen eignet. Es bietet eine hervorragende Haftung zwischen verschiedenen Materialien über einen breiten Temperaturbereich - und für ein breites Portfolio an Anwendungen und Branchen: von mehrschichtigen Verpackungen bis hin zum Bauwesen.

Yparex^{®} basiert auf mit Maleinsäureanhydrid (MAH) modifizierten und funktionalisierten Polyolefinverbindungen - allesamt sind diese ideale Haftvermittler und Verträglichkeitsvermittler.

Lotryl^{®}-Harze von SK Functional Polymer (vormals von Arkema) sind Ethylen-Acrylat-Copolymere. Sie verfügen über eine ausgezeichnete thermische Stabilität und Verarbeitbarkeit. Aufgrund ihrer hervorragenden Klebeeigenschaften und hervorragenden Verträglichkeit mit Thermoplasten werden Lotryl^{®}-Copolymere eingesetzt als:
- Schlagzähmodifikatoren für technische Kunststoffe (PET, PBT, PA, ABS);
- Viskositätsmodifikatoren zur Verflüssigung von Harzen wie ABS, HIPS, PBT, PA;
- Hochgefüllte Compounds und Masterbatches;
- Siegelschichten in flexiblen Verpackungen.

Die gebrauchsfertigen Seal-Peel-Harze von Lotryl^{®} Bestpeel sind so formuliert, dass sie auf PP, PET, PS und PVC haften.

Plexar-Verbindungsschichtharze von LyondellBasell, die in mehrschichtigen Strukturen verwendet werden, sind anhydridmodifizierte Polyolefine, die unterschiedliche Polymere miteinander verbinden, hauptsächlich in mehrschichtigen, coextrudierten Strukturen. Es wird berichtet, dass Plexar-Harze eine hervorragende Leistung bei Coextrusionsanwendungen wie Blas- und Gießfolien, Extrusionsbeschichtung, Blasformen, Folienextrusion, Draht- und Kabeltechnologie und anderen industriellen Klebeanwendungen bieten.

Im Rahmen dieser Erfindung sind als Haftvermittler für die Außenschicht der Schlauch(innen)folie (die beim Einsatz in einem Schlauchliner zur Kanalwand gerichtet ist) also folglich diejenigen Materialien bevorzugt, die auch ausgeprägte Eigenschaften und eine besondere Eignung als Schmelzklebstoff oder Hotmelt aufweisen. Diese Materialien können auch in Form eines (Folien)Bandes oder einer Folie zum Umwickeln oder Umhüllen der Schlauch(innen)folie verwendet werden, oder sie werden im Rahmen dieser Erfindung als Beschichtung für Nonwovens oder Wovens bzw. für Harz und Flüssigkeiten saugfähige Materialien verwendet.

Erfindungsgemäß sind solche Haftvermittler umfasst, die einen niedrigen Schmelzpunkt aufweisen, insbesondere in einem Temperaturbereich von 40 bis 160°C, bevorzugt von 50 bis 140°C, besonders bevorzugt von 60 bis 130°C und am meisten bevorzugt von 70 bis 120°C.

Daher betrifft die Erfindung eine Schicht mit einem thermisch aktivierbarbaren, schmelzklebenden Material mit haftvermittelnden Eigenschaften, welches einen niedrigen Schmelzpunkt aufweist, insbesondere in einem Temperaturbereich von 40 bis 160°C, bevorzugt von 50 bis 140°C, besonders bevorzugt von 60 bis 130°C und am meisten bevorzugt von 70 bis 120°C.

Erfindungsgemäß eignen sich daher nicht abschließend solche Materialien, wobei der Schmelzpunkt in °C in Klammern steht:
LOTADER^{®} AX8840 (104), AX8930 (67), 3430 (84), LX4110 (105), 6200 (102), 8200 (100), 4403 (80), 4700 (65) oder 4700T (79°C).

Sehr gut geeignet sind auch diese OREVAC^{®} T-Typen: 9304 (80), 9305 (68), 9307Y (93) oder 9318 (86°C).

Mit großem Vorteil können diese Materialien im Rahmen der Erfindung verwendet werden: LOTRYL^{®}-Typen wie 18MA02 (83), 24MA02 (68), 29MA03 (61), 35BA320 (65), 24MA07T (97), 28BA175T (102) oder 35BA40T (89°C).

Ideal waren auch folgende OREVAC^{®}-Typen: 18302N (123), 18334 (125), 18342N (125), 18507 (128) oder OE825 (118°C).

Als EVATANE^{®}EVA eignen sich: 28-420 (66), 28-800 (63), 33-45 (62), 33-400 (63), 40-55 (55) oder 42-60 (48°C).

Mit Vorteil wird erfindungsgemäß diese BYNEL^{™}-Type eingesetzt: 2022 (87°C).

Sehr gut bewährt haben sich auch die ADMER^{™}-Typen NF377E (120) oder NF837E (120°C), oder NF911E (97°C).

Typische Temperaturen treten häufig an den reaktiven Stellen im Zuge der Aushärtung (Installation) des Schlauchliners auf - je nach den Aushärtebedingungen oder -parametern. Üblich sind hier etwa Temperaturen im Bereich 90 bis 120°C, je nach System und Art der Aushärtung. Die relevanten Orte, an denen diese Temperaturen auftreten, sind insbesondere die Grenzschichten zu den harzgetränkten Faserbändern. Ursache für derartige Temperaturerhöhungen ist die exotherme Reaktion der verwendeten reaktiven Harze in der Verstärkungslage, die durch Zerfall eines lichtempfindlichen Initiators als Radikalbildner ausgelöst wird und folglich eine (radikalische) Polymerisationsreaktion in Gang setzt.

Die im Rahmen der Erfindung verwendete Grammatur für das Nonwoven oder für das für Harz und Flüssigkeiten saugfähige Material bewegt sich von 5 g/qm bis hin zu 10.000 g/qm, bevorzugt von 20 bis 1.000 g/qm, besonders bevorzugt von 30 g/qm bis 600 g/qm und am meisten bevorzugt von 50 bis 400 g/qm. Die (einseitige) Beschichtung des Nonwovens oder des für Harz und Flüssigkeiten saugfähigen Materials mit dem erfindungsgemäßen thermisch aktivierbaren schmelzklebenden Material, das (ausgeprägte) haftvermittelnde Eigenschaften hat, erfolgt mit Methoden, die dem Fachmann bekannt sind. Bevorzugt wird die Extrusionsbeschichtung des Vlieses mit dem thermisch aktivierbaren schmelzklebenden Material vorgenommen. Dabei wird eine Beschichtung mit dem thermisch aktivierbaren schmelzklebenden Material mit einem Flächengewicht von 5 bis 5.000 g/qm, bevorzugt von 20 bis 1.000 g/qm und am meisten bevorzugt von 40 bis 500 g/qm ausgewählt.

Besonders günstig ist die Grammatur der Beschichtung in etwa halb so groß wie die Grammatur des verwendeten Nonwovens oder des für Harz und Flüssigkeiten saugfähigen Materials. Wird demnach etwa ein 80 g/qm Nonwoven für den Bau des erfindungsgemäßen Schlauchliners eingesetzt, empfiehlt sich eine Beschichtung mit dem thermisch aktivierbaren schmelzklebenden Material von ca. 40 g/qm. Ist die Grammatur der Beschichtung zu hoch, kann das thermisch aktivierbare schmelzklebende Material zu tief in das Nonwoven eindringen, so dass dieses (auf der nicht beschichteten Seite) kein oder nur wenig Harz noch aufzunehmen vermag. Ist die Grammatur der Beschichtung zu niedrig, kann das thermisch aktivierbare schmelzklebende Material möglicherweise die Anknüpfung an die Schlauch(innen)folie nicht mehr bewirken.

In einer bevorzugten Ausführungsform kann das thermisch aktivierbare, schmelzklebende Material funktionelle Gruppen aufweisen. Besonders bevorzugt sind hierbei Säureanhydrid-, Alkohol- oder Epoxid-Gruppen. Wie sich im Rahmen dieser Erfindung herausgestellt hat, spielt neben dem Schmelzpunkt der thermisch aktivierbaren, schmelzklebenden Materialien, die zudem bevorzugt noch funktionelle Gruppen aufweisen können, für die Anknüpfung der Schlauchinnenfolie an das auszuhärtende bzw. ausgehärtete harzgetränkte Trägermaterial auch noch das Schmelzverhalten, wie der MFI, also der Melt-Flow-Index, oder die MFR, die Melt Flow Rate, eine wichtige Rolle. Der MFI wird üblicherweise nach ASTM D1238 (ISO 1133) gemessen. Dieser bewegt sich im Bereich 0,3 bis 900 g/10 min, bevorzugt zwischen 1 und 80 g/10 min, besonders bevorzugt zwischen 3 und 60 g/10 min und am meisten bevorzugt zwischen 4 und 50 g/10 min.

Die Einheit des MFI wird in (g/10 min) angegeben, die Bedingungen sind eine Temperatur von 190°C bei einer Belastung von 2.16 kg.

Solche geeigneten erfindungsgemäßen Materialien sind nicht abschließend (mit dem Melt-Flow-Index (g/10 min) (190°C-2.16 kg) in Klammern:
LOTADER^{®} AX 8700 (9 g/10 min), AX 8840 (5) und AX 8900 (6).

LOTADER^{®} 3210 (5), 3410 (5), LX 4110 (5), 4210 (10), 5500 (20), 6200 (40), HX 8290 (70) und 4503 (8) sowie 4700 T (7).

OREVAC^{®} T kann erfindungsgemäß ebenso sehr vorteilhaft verwendet werden, wie 9304 (7,5), 9307Y (10,5) oder 9318 (7).

Diese Lotryl-Typen kommen in Frage: LOTRYL^{®} 20 MA08 (8), 24 MA005 (0,5), 35 BA 40 (40), 28BA175T (175) und 28BA700T (700).

Zu empfehlen sind auch diese OREVAC^{®}-Typen: 18211 (3,5), 18215 (5), 18603 (3,5), 18610 (3), 18342N (3,5), 18507 (5), und OE850 (7,5).

Weiter geeignet sind diese EVATANE^{®}EVA-Typen: 28-03 (3), 28-25 (25), 28-40 (40), 28-420 (420) und 28-800 (800).

Zu empfehlen sind auch diese ADMER^{™}-Typen: NF927E (1,3), NF 911E (2,5), AT 1955E (2,6) oder SF730E (3,0).

Verwendet werden können auch diese BYNEL^{™}-Typen:
21E781 (2), 21E787 (1,6), 21E810 (1,9), 22E757 (8), 22E780 (2), 22E804 (5) oder 30E753 (2,1 g/10 min)).

Zu empfehlen sind auch diese Plexar-Typen: PX1007 (3,1), PX1936 (2,1), PX2246 (0,45), PX 2250 (6,0) oder PX2413 (5,5 g/10 min).

Im Rahmen der Erfindung stellte sich heraus, insbesondere auf den MFI zu achten. Das Aufschmelzen des thermisch aktivierbaren, schmelzklebenden Materials ist zwar ein wichtiges Kriterium, jedoch kann vorteilhaft der MFI beachtet werden. Für eine hervorragende Anhaftung der Schlauchinnenfolie, so dass diese nach Installation des Schlauchliners im sanierten Kanal(rohr) verbleiben kann, darf der MFI bei einer gegebenen Schmelztemperatur nicht zu niedrig liegen, sonst findet keine Anbindung statt, ebenso darf der MFI dann aber auch nicht zu hoch sein, da andernfalls das thermisch aktivierbare, schmelzklebende Material zum Beispiel vollständig in ein Nonwoven (oder Woven) eindringen könnte. Falls dies passiert, steht das vollständig vom Nonwoven oder Woven "aufgesaugte" thermisch aktivierbare, schmelzklebende Material nicht mehr zur Verfügung, um sich noch mit der zur Kanalwand nach außen gerichteten Außenschicht der erfindungsgemäßen Schlauchfolie im Zuge der Aushärtung des Schlauchliners zu verbinden.

Zudem kann das Nonwoven dann viel weniger Harz aufsaugen und sich dadurch weniger gut oder gar nicht mehr mit dem Harz, wie etwa in der Verstärkungslage verbinden. In solchen Fällen, bei unpassendem MFI, besteht dann die Gefahr, dass die Schlauchinnenfolie nicht oder nicht überall mit dem ausgehärteten Kunststoff verbunden ist.

Im Rahmen dieser Erfindung stellte sich ferner heraus, als thermisch aktivierbarbares, schmelzklebendes Material mit haftvermittelnden Eigenschaften ein Material zu wählen, welches eine Vicat-Erweichungstemperatur unter 100°C aufweist, insbesondere 20 bis unter 100°C, bevorzugt zwischen 30 und 90°C und besonders bevorzugt zwischen 35 und 80°C, wobei die Vicat-Erweichungstemperatur gemäß DIN EN ISO 306 / ASTM D1525 bestimmt wird.

Ebenfalls zu der oben genannten Bedeutung zu MFR und MFI ist auch die Vicat-Erweichungstemperatur eine wesentliche thermische Eigenschaft, auf die bevorzugt geachtet werden soll, wenn man die Schlauchinnenfolie nach der Aushärtung/Installation untrennbar an das ausgehärtete Harz/Glasfasergewebe angebunden haben möchte. Ein zu hoher Vicat-Erweichungspunkt, der merklich über 100°C liegt, ermöglicht diese untrennbare Anbindung nicht. Ist die Vicat-Erweichungstemperatur des thermisch aktivierbarbaren, schmelzklebenden Materials mit haftvermittelnden Eigenschaften indes zu niedrig und liegt unter 20°C, ist es sehr schwer bis unmöglich, diese mindestens eine Schicht im Schlauchliner handzuhaben, ohne dass vorher eine nachteilige Verblockung eintritt. Solch eine Verblockung kann etwa bei einer aufgewickelten Schlauchfolie auf der Rolle geschehen, wenn die Außenschichten dieser Folie aufeinander treffen, ehe diese Folie im Rahmen der Verwendung abgewickelt wird. Eine gleiche Verblockung kann auch bei einer Rolle eines (Folien)Bandes oder einer Folie des thermisch aktivierbarbaren, schmelzklebenden Materials mit haftvermittelnden Eigenschaften eintreten, so dass auch diese Rolle aufgrund der Verblockung nicht mehr abgewickelt werden kann. Ist die Vicat-Erweichungstemperatur des thermisch aktivierbarbaren, schmelzklebenden Materials mit haftvermittelnden Eigenschaften demnach zu niedrig, hilft auch die Zugabe von slip oder Antiblock-Additiven oder slip-/Antiblock Kombinations-Batchen nicht, um die (vorherige und ungewollte) Verblockung zu vermeiden und um die einzusetzenden Folien oder beschichteten Nonwovens handzuhaben.

In einer weiteren besonderen Ausführungsform wird auf die Schlauchinnenfolie, die erfindungsgemäß eine Schicht mit einem thermisch aktivierbaren schmelzklebenden Material (gerichtet in Richtung der Kanalwand) mit ausgeprägten haftvermittelnden Eigenschaften aufweist, ein beschichtetes Vlies oder beschichtetes Nonwoven oder beschichtetes Woven eingebracht, insbesondere damit umwickelt oder umhüllt. Das Einbringen der Schicht in ein Vlies oder Nonwoven ist bevorzugt. Diese Beschichtung kann noch einer Vorbehandlung - nach der Beschichtung, auf der nicht Nonwoven Seite, unterzogen werden. Besonders bevorzugt ist die thermisch aktivierbare schmelzklebende Schicht des damit beschichteten Vlieses oder Nonwovens wiederum identisch mit der Schicht oder dem Material, aus dem die erfindungsgemäße thermisch aktivierbare schmelzklebende (Außen-)Schicht (gerichtet in Richtung der Kanalwand) der Schlauch(innen)folie besteht.

In einer weiteren besonderen Ausführungsform wird auf die Schlauchinnenfolie, die erfindungsgemäß eine Schicht mit einem thermisch aktivierbaren schmelzklebenden Material (gerichtet in Richtung der Kanalwand) mit ausgeprägten haftvermittelnden Eigenschaften, nochmals mit einem (Folien)Band in Form des selbem oder eines anderen thermisch aktivierbaren schmelzklebenden Material umwickelt oder umhüllt. Danach wird nochmals mit einem beschichteten Vlies oder beschichteten Nonwoven umwickelt oder umhüllt. Die Beschichtung des Vlieses oder Nonwovens ist bevorzugt wieder eine thermisch aktivierbare schmelzklebende Schicht bzw. ein derartig aktivierbares Material mit ausgeprägten haftvermittelnden Eigenschaften. Besonders bevorzugt ist die thermisch aktivierbare schmelzklebende Schicht des damit beschichteten Vlieses oder Nonwovens wiederum identisch mit der Schicht oder dem Material, aus dem die erfindungsgemäße thermisch aktivierbare schmelzklebende Außenschicht (gerichtet in Richtung der Kanalwand) der Schlauchinnenfolie besteht bzw. auch das gleiche Material ist, aus dem die Folien oder die Folienbänder bestehen, mit denen die Schlauch(innen)folie umwickelt oder umhüllt wird.

Daher betrifft die Erfindung ebenfalls zwischen der Innenfolie und der mindestens einen Verstärkungslage mindestens eine Schicht mit mindestens einem thermisch aktivierbarbaren, schmelzklebenden Material mit haftvermittelnden Eigenschaften, welches vorzugsweise in einem Woven, insbesondere Vlies oder Nonwoven zusätzlich enthalten ist.

Daher betrifft die Erfindung ebenfalls zwischen der Innenfolie und der mindestens einen Verstärkungslage mindestens zwei Schichten mit mindestens einem thermisch aktivierbarbaren, schmelzklebenden Material mit haftvermittelnden Eigenschaften, welche jeweils in einem Woven, insbesondere Vlies oder Nonwoven zusätzlich enthalten ist.

Auf diese Weise ist erfindungsgemäß besonders vorteilhaft gewährleistet, dass sich im Zuge der Harzhärtung im Rahmen der Installation des Schlauchliners zur Sanierung des schadhaften Kanals, durch die aufgrund der exothermen Harzhärtung erfolgenden Erwärmung, die Außenschicht der Schlauch(innen)folie, die ein thermisch aktivierbares schmelzklebendes Material mit ausgeprägten haftvermittelnden Eigenschaften ist bzw. aus diesem besteht, untrennbar mit einem Band eben aus diesem oder einem sich ähnlich verhaltenen Material, mit dem diese Außenschicht der Schlauch(innen)folie bzw. damit die gesamte Schlauch(innen)folie umwickelt ist, verbindet. Das thermisch aktivierbare Material mit ausgeprägten haftvermittelnden Eigenschaften wiederum verbindet sich im Zuge der Aushärtung auch mit den mit Harz getränkten Verstärkungslage(n). Dabei kann die Verwendung von Nonwovens zur Verbindung mit den harzgetränkten Verstärkungslage(n), wie oben beschrieben, sehr unterstützend wirken. Ebenso vorteilhaft können die zu verbindenden Schichten aus dem thermisch aktivierbaren, schmelzklebenden Material mit ausgeprägten haftvermittelnden Eigenschaften noch einer Vorbehandlung unterzogen werden. Dadurch wird die Oberflächenenergie merklich erhöht und übersteigt mitunter einen Wert von 40 mN/m deutlich.

Die oder diese untrennbare Verbindung geschieht einerseits, weil man durch die Aufstellung des Schlauchliners bereits einen gewissen Druck zur Verbindung der thermisch aktivierbaren schmelzklebenden Materialien mit ausgeprägten haftvermittelnden Eigenschaften aufgebracht hat (die sich mitunter in verschiedenen Schichten befinden können), der sich zum Beispiel von einigen Millibar bis hin zu etlichen bar bewegen kann.

Erfindungsgemäß bevorzugt ist ein Druck von 50 mbar bis 20 bar und eine Temperatur von 60 bis 160°C.

Andererseits entsteht durch die exotherme Aushärtung des Harzes sehr viel Energie und Wärme, so dass die Temperatur derart hoch ansteigt, so dass eben die thermisch aktivierbaren schmelzklebenden Materialien mit ausgeprägten haftvermittelnden Eigenschaften auch wirklich aufschmelzen und ihrer Eigenschaft als Hotmelt-Klebstoff gerecht werden.

Schließlich entsteht die Verbindung neben der Applikation von hohem Druck und hoher Temperatur auch über die Zeit, weil der erfindungsgemäße Schlauchliner wenige Sekunden bis Minuten Zeit hat, an den thermisch aktivierbaren Stellen aufzuschmelzen (über die Temperatur), sich aneinander zu pressen (über den Druck) und sich zu verbinden (über die Zeit).

Selbstredend sind hierzu die idealen Temperaturen, Drücke und Zeiten je nach Art und Verwendung der thermisch aktivierbaren Materialien einzustellen, um die bestmögliche Verbindung zu erzielen.

Auf die gleiche Weise, wie oben beschrieben, ist gewährleistet, dass sich im Zuge der Harzhärtung im Rahmen der Installation des Schlauchliners zur Sanierung des Kanals, durch die aufgrund der exothermen Harzhärtung erfolgenden Erwärmung, die Außenschicht der Schlauch(innen)folie (im Schlauchliner zur Kanalwand gerichtet), die ein thermisch aktivierbares schmelzklebendes Material mit ausgeprägten haftvermittelnden Eigenschaften ist bzw. aus diesem besteht, untrennbar mit einem Band, das ein beschichtetes Nonwoven (z.B. Vlies) ist, wobei die Beschichtung aus demselben oder einem sich ähnlich verhaltenden Material, aus dem die Außenschicht der Schlauchinnenfolie besteht, verbindet.

Da die beschichtete Seite des Nonwovens unmittelbar auf die Außenschicht der Schlauchfolie vorzugsweise gewickelt wird oder diese umhüllt, treffen die thermisch aktivierbaren schmelzklebenden Materialien mit ausgeprägten haftvermittelnden Eigenschaften aufeinander und verbinden sich im Aushärteprozess im Zuge der Installation des Schlauchliners miteinander. Das erfolgt aufgrund der Temperaturerhöhung durch die exotherme Aushärtung/Polymerisation des Harzes unter Aufrechterhaltung eines bestimmten Druckes und einer ausreichenden Zeit, damit sich die Materialien verbinden können.

Das Nonwoven oder Vlies, oder allgemein ein für Harz- oder Flüssigkeiten saugfähiges Material, ist besonders geeignet, sich mit der verwendeten Verstärkerlage zu verbinden.

Daher ist erfindungsgemäß eine vollständige Bedeckung der Außenseite der Schlauch(innen)folie mit einer derartigen in Bezug auf Harz oder Flüssigkeiten saugfähigen Schicht möglich. Schwachstellen in der Schlauchfolie, die beim Platzen fatale Folgen haben könnten, werden durch das erfindungsgemäße Verfahren wirkungsvoll vermieden. Die vollständig mit Harz-saugfähigen Schichten verbundene Schlauch(innen)folie weist dabei - in Bezug auf die Schlauch(innen)folie - in der bevorzugten Ausführungsform insbesondere auch keine Naht auf. Die Schlauchfolie wird hierbei bevorzugt durch Blasfolienextrusion direkt erhalten.

Für das Harz-saugfähige Material der Verstärkerlage können insbesondere aus Fasern bestehende Materialien verwendet werden, vorzugsweise Vliese, Filze, Gewebe, Gewirke, Gestricke, Gelege, Textilien allgemein, Stoffe, insbesondere Schaumstoffe.

Im Rahmen dieser Erfindung wird unter dem Begriff "Vlies" ein Gebilde aus Fasern begrenzter Länge, Endlosfasern oder geschnittenen Garnen jeglicher Art und jeglichen Ursprungs verstanden, die auf irgendeine Weise zu einem Vlies bzw. einer Faserschicht oder einem Faserflor zusammengefügt und auf irgendeine Weise miteinander verbunden worden sind. Davon ausgeschlossen ist das Verkreuzen bzw. Verschlingen von Garnen, wie es beim Weben, Wirken, Stricken, der Spitzenherstellung, dem Flechten und der Herstellung von getuften Erzeugnissen geschieht. Der überwiegende Teil der Vliesstoffe sind flexible textile Flächengebilde, da sie aus textilen Fasern als Hauptstrukturelement aufgebaut sind.

Als Gewebe (Woven) kann beispielsweise ein Jeansstoff verwendet werden. Auch andere Gewebe, Gestricke, Gewirke etc. können verwendet werden, solange sie Harz aufsaugen können bzw. sich im Rahmen der Aushärtung der harzgetränkten Faserbänder oder Fasergewebe untrennbar mit diesen verbinden können.

Die im Rahmen dieser Erfindung verwendete Schlauch(innen)folie kann durch (Co)-Extrusion, besonders bevorzugt durch Blasfolien-(Co)-Extrusion, hergestellt werden, vorzugsweise ohne Siegelnaht. Alternativ kann die Schlauchfolie zunächst als Cast-Folie durch Cast-(Co)-Extrusion erhalten werden oder als sonstige Flachfolie. Solche Folien können dann jeweils zu einem Schlauch versiegelt oder geschweißt werden. Eine Prägung, Reckung, Konditionierung (reversible Aufnahme von Feuchtigkeit, vorzugsweise von Wasser, durch ein thermoplastisches Kunststoffmaterial wie Homo- oder Copolyamid) und/oder Bedruckung der erfindungsgemäßen Folien kann vorteilhaft sein. Bevorzugt ist die Schlauchfolie bzw. die Schlauch(innen)folie transparent. Besonders bevorzugt weist die Schlauch(innen)folie eine besonders hohe Transmission für UV- und sichtbares Licht im Wellenlängenbereich von 300 nm bis 450 nm auf. Die Transmission in diesem Wellenlängenbereich liegt über 10 %, bevorzugt über 20 %, besonders bevorzugt über 40 % und am meisten bevorzugt über 50 %.

Vorteilhaft ist, dass keine freien Bereiche ohne Nonwoven, also frei von Nonwoven oder ohne einer Schicht thermisch aktivierbaren schmelzklebenden Materials entlang des Schlauchfolienumfangs verbleiben. Das kann mit dieser Erfindung problemlos erreicht werden.

Denn das ist möglich, wenn zum Beispiel eine bereits im Stand der Technik beschriebene übliche Schlauchfolie oder Schlauch(innen)folie, etwa eine Schlauchfolie mit dem Aufbau PE (innen), Haftvermittlerschicht und PA-Außenschicht, die im Rahmen dieser Erfindung ebenfalls zum Einsatz kommen kann, oder eben eine erfindungsgemäße Schlauchfolie, die eine thermisch aktivierbare schmelzklebende Schicht mit ausgeprägten haftvermittelnden Eigenschaften nach außen (in Richtung Kanalwand) aufweist, auf einem Wickeldorn über das bekannte Wickelverfahren mit einer Folie oder einem Band, das aus einem reinen thermisch aktivierbaren schmelzklebenden Material, insbesondere einem Hotmelt, besteht, vollflächig umwickelt bzw. umhüllt wird. Dabei kann besagte Folie oder besagtes Band auf der Seite, die nicht zur Schlauchfolie gewickelt wird, mit einem Nonwoven, z.B. einem Vlies fest verbunden sein. Dieses Wickelverfahren lässt keine freien Stellen bei der Schlauchfolie oder der Schlauch(innen)folie mehr offen, die nicht mit einem thermisch aktivierbaren schmelzklebenden Material mit ausgeprägten haftvermittelnden Eigenschaften bedeckt sind bzw. die nicht mit einem Nonwoven oder einem für Harz oder Flüssigkeiten saugfähigen Material bedeckt wären.

Vorzugsweise werden Schlauchfolien mit einer flachgelegten Schlauchbreite von 10 mm bis 50.000 mm verwendet, vorzugsweise von 50 mm bis 4.000 mm, am meisten bevorzugt von 100 mm bis 3.000 mm.

Die verwendeten (erfindungsgemäßen) Schlauchfolien oder Schlauch(innen)folien haben weiterhin eine bevorzugte Dicke von 20 µm bis 10.000 µm, bevorzugt zwischen 50 µm bis 4.000 µm und am meisten bevorzugt von 100 µm bis 2.000 µm.

Die Außenschicht der Schlauchfolie, die aus einem thermisch aktivierbaren schmelzklebenden Material mit ausgeprägten haftvermittelnden Eigenschaften besteht oder bestehen kann, weist bevorzugt eine Dicke von 2 bis 5.000 µm, bevorzugt von 5 bis 3.000 µm, besonders bevorzugt von 10 bis 2.000 µm und am meisten bevorzugt eine Dicke von 20 bis 1.000 µm auf.

Die den Harz-saugfähigen Schichten zugewandte Schicht der Schlauchfolie oder der Schlauch(innen)folie kann eine Schicht sein, die ein thermoplastisches Olefin-Homo- oder Copolymer enthält, vorteilhafterweise zu mehr als 50 Gew.-%, bevorzugt zu mehr als 75 Gew.-%, und besonders bevorzugt zu mehr als 95 Gew.-%. Das besagte thermoplastische Olefin-Homo- oder Copolymer ist vorzugsweise ein Polyethylen (PE).

Am meisten bevorzugt besteht die der Kanalwand zugewandte Schicht der Schlauchfolie oder Schlauch(innen)folie, die zum Bau eines Schlauchliners verwendet wird, aus einem thermisch aktivierbaren schmelzklebenden Material, das haftvermittelnde Eigenschaften aufweist und üblicherweise als Haftvermittler Verwendung findet.

Wird die Schlauchfolie im Rahmen dieser Erfindung und erfindungsgemäß jedoch mit einer Folie oder einem (Folien)Band, das aus einem thermisch aktivierbaren schmelzklebenden Material besteht, das (ausgeprägte) haftvermittelnde Eigenschaften hat, vollflächig umwickelt, so dass keine unbedeckten Stellen mehr vorliegen, kann die Schlauchfolie an der zur Kanalwand gerichteten Außenschicht selbstverständlich auch andere Polymere enthalten, zum Beispiel auch Polyamid, Polypropylen oder Polyester. Prinzipiell ist jedes Polymer als Material für die zur Kanalwand gerichtete Außenschicht der Schlauch(innen)folie geeignet und verwendbar. Denn indem eine Folie oder ein (Folien)Band aus einem thermisch aktivierbaren schmelzklebenden Material, das haftvermittelnde Eigenschaften aufweist (mit oder ohne Nonwoven) verwendet wird, um die Außenschicht der Schlauchfolie zu umwickeln oder zu umhüllen, sorgen deren ausgeprägte haftvermittelnde Eigenschaften zur Schlauchfolienseite eben für die hervorragende Haftung, wenn es zu einer thermischen Aktivierung kommt. Mit den zusätzlichen thermisch aktivierbaren schmelzklebenden Eigenschaften des erfindungsgemäß verwendeten Materials zwischen der Schlauch(innen)folie und den harzgetränkten Fasern findet im Zuge der exothermen Aushärtung eine untrennbare Verbindung nicht nur mit der Schlauchfolie oder der Schlauchinnenfolie, sondern insbesondere auch zu den harzgetränkten Fasern oder Faserbändern statt. Auf der Seite zu den harzgetränkten Fasern oder Faserbändern kann die Anknüpfung, wie bereits beschrieben, durch die Verwendung eines Nonwovens, welches in Richtung der Fasern oder Faserbänder zeigt, bevorzugt unterstützt werden.

Wird die Schlauchfolie mit (Folien)Bändern, die aus dem thermisch aktivierbaren schmelzklebenden Material, das (ausgeprägte) haftvermittelnde Eigenschaften hat, bestehen, umwickelt, kann damit eine Dicke von 5 µm bis 50.000 µm, bevorzugt von 10 µm bis 20.000 µm und am meisten bevorzugt von 20 µm bis 10.000 µm um die Schlauchfolie oder um die Schlauch(innen)folie gewickelt werden. Die Umwicklung mit diesen Bändern kann mehr oder weniger überlappend oder nicht überlappend erfolgen. Ebenso kann eine Umhüllung vorgenommen werden. So kann die Dicke eingestellt werden, die man mit der Umwicklung oder Umhüllung der Schlauchfolie oder der Schlauch(innen)folie mit dem thermisch aktivierbaren schmelzklebenden Material, das (ausgeprägte) haftvermittelnde Eigenschaften hat, wünscht. Üblicherweise werden die thermisch aktivierbaren schmelzklebenden Materialien in Form einer Folie oder eines Folienbandes eingesetzt, deren Dicke sich zwischen 5 µm und 10.000 µm bewegt. Sollte das Folienband aufgrund zu geringem Schmelzpunkt oder aufgrund einer niedrigen Vicat-Erweichungstemperatur zur Verblockung auf einer Rolle neigen, empfiehlt sich die Zugabe von slip-Additiven, oder von Antiblock-Additiven oder noch besser von slip-Antiblock-Additiven (als Kombi-Batch). Solche Additive, die u.a. in Form von Masterbatchen dem thermisch aktivierbaren schmelzklebenden Material im Zuge der Herstellung der Folie oder des Folienbandes bevorzugt mittels Extrusion (Blasfolien- oder Flachfolien- oder Castfolien-(co-)extrusion) zugegeben werden können, sind dem Fachmann bekannt, und diese Additive sind käuflich zu erwerben. So schreibt etwa die Firma Constab, Rüthen, Deutschland dazu: Gleitmittel und Antiblock Masterbatches müssen mit CONSTAB Slip-Antiblock nicht mehr einzeln im Extrusionsprozess zugefügt werden. Als geeignetes Slip-Additiv ist zu nennen: CONSTAB CONSLIP^{®} 440 PPR, verkauft von Constab oder der Kafrit Group.

Ein geeignetes Antiblockmittel ist zum Beispiel: CONSTAB CON-X^{®} AB 601 PE, das von Constab oder der Kafrit Group verkauft wird.

Kombi-Batches machen slip- und Antiblockwirkung bei einer Folie in einem Schritt möglich. Masterbatches werden als Kombi-Batches bezeichnet, wenn sie Gleitmittel- und Antiblock-Partikel in einem bewährten Verhältnis vereinen. Dadurch ist es nicht mehr (unbedingt) notwendig, Gleitmittel und Antiblock Masterbatches separat im Extrusionsprozess beizugeben.

Die Herstellung dünner Kunststofffolien verläuft optimal, wenn man Antiblock-Masterbatches z.B. von CONSTAB in den Prozess integriert. Eine breite Angebotspalette reicht von vielfältigen chemischen Beschaffenheiten über Partikelgrößen bis hin zu entsprechenden Konzentrationen, die der Fachmann kennt.

Das zur Verbindung verwendete Material, das die Schlauchfolie mit der Harz-saugfähigen Schicht verbindet, sofern zum Beispiel ein Nonwoven eingesetzt wird, sollte bevorzugt ein Polymer sein, das chemisch demjenigen Material der Außenschicht der Schlauchfolie entspricht, an die das Harz-saugfähige Material angebunden werden soll. Am meisten bevorzugt ist im Rahmen dieser Erfindung die Verwendung eines thermisch aktivierbaren schmelzklebenden Materials, das haftvermittelnde Eigenschaften aufweist.

Generell gilt: Polymere, die eine vergleichbare chemische Basis aufweisen bzw. die zur gleichen Polymerklasse gehören, gehen üblicherweise auch miteinander eine sehr gute Verbindung ein.

Das Wickelverfahren mit einem thermisch aktivierbaren schmelzklebenden Material, das haftvermittelnde Eigenschaften aufweist, und das noch mit einem Nonwoven verbunden sein kann (oder auch als reines Material verwendet werden kann), um eine bereits vorgebildete Schlauchfolie oder Schlauch(innen)folie, ist das bevorzugte Verfahren im Rahmen dieser Erfindung. Dadurch ist gewährleistet, dass die Schlauchfolie nach der Aushärtung im sanierten Kanal an der Innenseite zum durchströmenden Medium verbleibt.

Alternativ ist möglich, ausgehend von einer Schlauchfolie oder Schlauchinnenfolie mit oder ohne eines thermisch aktivierbaren schmelzklebenden Materials, das haftvermittelnde Eigenschaften aufweist, auf der zur Kanalwand gerichteten (äußeren) Schicht dieser Schlauchfolie, diese Schlauchfolie eben mit einer oder mehreren Lagen eines thermisch aktivierbaren schmelzklebenden Materials, das haftvermittelnde Eigenschaften aufweist, zu umhüllen. Das muss demnach kein Wickelverfahren sein. Man spricht dann eher von einem "Legeverfahren". Denkbar ist also auch ein Verfahren, bei dem die innere Schlauchfolie flach auf den Boden gelegt wird und dann eine oder mehrere Lagen einer Folie aus einem thermisch aktivierbaren schmelzklebenden Material, das haftvermittelnde Eigenschaften aufweist, um diese Schlauchfolie appliziert oder herumgelegt wird. Die innere Schlauchfolie kann zum Beispiel in einen Halbschlauch, der eine geringfügig höhere Flachbreite als die Schlauchinnenfolie hat und der aus einem thermisch aktivierbaren schmelzklebenden Material, das haftvermittelnde Eigenschaften aufweist, besteht, eingelegt werden. Es können dazu auch mehrere solcher Halbschläuche verwendet werden. Bevorzugt werden mindestens 2 solcher Halbschläuche verwendet, da dann die Kanten des jeweiligen Halbschlauches auf gegenüberliegende Seiten der Schlauchinnenfolie angeordnet sein können und somit erneut eine absolut vollflächige Bedeckung oder Umhüllung der Schlauchinnenfolie mit dem thermisch aktivierbaren schmelzklebenden Material, das haftvermittelnde Eigenschaften aufweist, sichergestellt ist. Dabei kann oder könnte dieser Halbschlauch (oder wenigstens einer dieser Halbschläuche) auf der nicht zur Schlauchinnenfolie oder Schlauchfolie gerichteten Seite mit einem Nonwoven verbunden sein, das in Richtung der Kanalwand weist, während das thermisch aktivierbare schmelzklebende Material, das haftvermittelnde Eigenschaften aufweist, zur Schlauchfolie bzw. zur Schlauchinnenfolie weist.

Anschließend kann auch hier der Schlauchliner weiter aufgebaut und hergestellt werden, indem man danach auf die Seite des Nonwovens (sofern ein solches verwendet wird) mit (Glas)Fasern umhüllt, ehe man im letzten Schritt diese Fasern, die mit Harz getränkt sein können oder nicht, mit einer UV- und lichtdichten Außenfolie umhüllt und diese zunächst als Flachfolie ausgebildete Außenfolie bevorzugt zu einem Schlauch versiegelt oder verschweißt, so dass keine schädlichen Bestandteile in die Umgebung, z.B. ins Erdreich, gelangen können. Sollten - wie bei einem sogenannten "Trockenliner" - die (Glas)Fasern noch nicht mit Harz imprägniert sein, kann man dies auf einfache Weise erreichen, indem man die zu einem Schlauch gesiegelte Außenfolie an geeigneten Stellen aufschlitzt, das Harz von außen zu den Fasern eingibt, und danach die Außenfolie wieder verschließt. Das Harz wird dann in die (Glas)Fasern homogen eingebracht und dort verteilt (z.B. "einmassiert"), so dass es keine harzfreien Stellen in den Fasern (des späteren Trägermaterials) mehr gibt. Bei Verwendung dieses Verfahrens hat es sich als besonders vorteilhaft erwiesen, wenn die verwendete Außenfolie zumindest kontakttransparent ist. Auf diese Weise kann von außen leicht erkannt werden, ob alle (Glas)Fasern mit Harz getränkt sind, oder ob es noch Bereiche gibt, bei denen man Harz zur Verbindung und zur Tränkung (Imprägnierung) mit den (Glas)Fasern "nachschießen" müsste.

Die für den Bau eines Schlauchliners verwendete Schlauchfolie, die auch treffend Schlauchinnenfolie genannt wird (weil diese nach Installation des Schlauchliners an der Innenseite des sanierten Kanals verbleibt, durch den auch das jeweilige Medium strömt, das durch den Kanal transportiert werden soll), ist bevorzugt eine Mehrschichtfolie. Eine diesbezügliche vorteilhafte Schlauchfolie besitzt eine Schicht, die den Harz-getränkten Fasern bevorzugt nicht zugewandt ist und die ein Homo- oder Copolyamid (PA) enthält, vorteilhafterweise zu mehr als 50 Gew.-%, bevorzugt zu mehr als 75 Gew.-%, und besonders bevorzugt zu mehr als 95 Gew.-%. Polyamid weist einen sehr hohen Verschleißwiderstand auf, besitzt eine hohe Festigkeit, eine sehr hohe Abriebsbeständigkeit, eine hohe Steifigkeit und Zähigkeit und außerdem eine gute Chemikalienbeständigkeit. Auch sind die Gleiteigenschaften gut. Bei Verwendung als Schlauchinnenfolie für das Schlauchlining-Verfahren, die mittels des erfindungsgemäßen Verfahrens besonders bevorzugt hergestellt wird, dient das Polyamid insbesondere als Barriere gegenüber Monomeren wie beispielsweise Styrol. Hinzu kommt, dass Polyamide üblicherweise höhere Schmelzpunkte aufweisen, die bevorzugt über 150°C liegen. Wird eine UV-Lichtquelle zur Aushärtung im Zuge der Installation des Schlauchliners durch die Innenseite der Schlauchinnenfolie gezogen, führen die hohen Temperaturen innen nicht zu einem Schmelzen der Innenschicht der Schlauchinnenfolie, so dass das hohe Gewicht der UV-Lichtaushärteanlage ("Lichterkette") die Innenschicht nicht verletzen kann, weil diese noch nicht geschmolzen ist.

Statt Polyamid kann die innere Schicht (die bei der Schlauchinnenfolie zur Seite des durchströmenden Mediums gerichtet ist), allerdings auch ein anders Polymer sein oder auch eine Mischung eines oder mehrerer Polymere darstellen. Bevorzugt sind etwa auch sogenannte Thermoplastische Polyurethane, wie TPU, zu nennen, die ebenfalls sehr gute Abriebsbeständigkeiten besitzen.

Vorzugsweise weist die verwendete Schlauchfolie oder Schlauch(innen)folie einen 2-, oder 3-Schichtaufbau, einen 4-Schichtaufbau, einen 5-Schichtaufbau, einen 7-oder sogar 9-schichtigen Schichtaufbau auf. Der Zahl der Schichten sind hier keine Grenzen gesetzt. Für eine Schlauchinnenfolie sind 3-Schichtfolien mit dem Aufbau z.B. PE/HV/PA (Polyethylen/Haftvermittler/Polyamid) oder 5-Schichtfolien wie z.B. PE/HV/PA/HV/PE oder PE/HV/PE/HV/PA oder PA/HV/PA/HV/PE, eine siebenschichtige Folie beispielsweise eine Schichtfolge PE/PE/HV/PA/HV/PE/PE, PA/HV/PE/PE/PE/PE/PE oder PA/HV/PA/HV/PE/PE/PE oder PA/HV/PA/HV/PA/HV/PE mit Vorteil einsetzbar. Erfindungsgemäß enthält die Schlauchfolie oder die Schlauchinnenfolie mindestens eine - nach außen zur Kanalwand gerichtete Schicht - aus einem thermisch aktivierbaren, schmelzklebenden Material, das (ausgeprägte) haftvermittelnde Eigenschaften besitzt.

Als Beispiel für eine derartige Schlauchinnenfolie mit einem thermisch aktivierbaren, schmelzklebenden Material, das als HM abgekürzt wird, kommen etwa diese Strukturen in Frage (wobei das erstgenannte Polymer nach innen zum Medium, das letztgenannte Polymer nach außen hin zur Kanalwand gerichtet ist:
PA/HV/PA/HV/HM oder auch PA/HV/PA/HM/HM oder auch PE/HV/PA/HV/HM oder PE/HV/PA/HM/HM oder PA/HM/HM/HM/HM. Den Kombinationen sind hier keine Grenzen gesetzt. Das thermisch aktivierbare, schmelzklebende Material mit (ausgeprägten) haftvermittelnden Eigenschaften, das als HM abgekürzt wird, kann, wie bereits erläutert, auch die Eigenschaften eines Haftvermittlers erfüllen.

Eine erfindungsgemäße 3-Schichtfolie als Schlauchinnenfolie sähe dann zum Beispiel so aus:
PA/HM/HM oder PA/HV/HM. Auch eine 2-Schichtfoilie als erfindungsgemäße Schlauchinnenfolie mit dem Aufbau PA/HM ist selbstverständlich möglich. Allerdings muss schon gesagt werden, dass die Zahl der Möglichkeiten zur Anordnung der Schichten bei der (erfindungsgemäßen) Schlauchinnenfolie natürlich mit der Zahl der Schichten dieser Schlauchfolie zunimmt.

Bevorzugt finden dehnbare Harz-saugfähige Materialien Verwendung, beispielsweise Polyester-Vliese, Baumwoll-Vliese, Polyamid-Vliese, Polypropylen-Vliese oder reine Polyethylen-Vliese. Auch Filzstoffe aus diesen Materialien sind bevorzugt einsetzbar.

Das Flächengewicht der Harz-saugfähigen Schichten beträgt, sofern solche im Rahmen der Erfindung verwendet werden, vorteilhafterweise zwischen 5 g/qm und 10.000 g/qm, vorzugsweise zwischen 20 g/qm und 1.000 g/qm, besonders bevorzugt zwischen 30 g/qm und 600 g/qm.

Die besonders bevorzugt mit dem erfindungsgemäßen Verfahren hergestellte Schlauchfolie oder Schlauchinnenfolie kann beim UV-lichthärtenden Verfahren mit GfK äußerst vorteilhaft eingesetzt werden. Die Schlauchinnenfolie verbleibt hierbei nach dem Aushärten des Harzes im (sanierten) Kanal(rohr).

Die besagte Schlauchinnenfolie hat vorteilhafterweise eine (radiale) Dehnung von mindestens 2 %, besser mindestens 10 %, noch besser mindestens 15 %, bevorzugt von 20 %, besonders bevorzugt von 25 % und am meisten bevorzugt von 30 % und mehr (insbesondere in radialer Richtung), ohne dass eine Schicht in der Schlauchinnenfolie aufreißt (sog. Spleiß) und insbesondere ohne dass die Schlauchinnenfolie aufplatzt und somit der Schlauchliner zerstört wird bzw. schon vor der Installation unbrauchbar wird. Die Dehnung errechnet sich aus der aufgeblasenen Schlauch(innen)folie wie folgt: Dehnung in % = [Umfang der Schlauchfolie nach dem Aufblasen - Umfang der Schlauchfolie vor dem Aufblasen] / [Umfang der Schlauchfolie vor dem Aufblasen]

Die erfindungsgemäß verwendete Schlauchfolie oder Schlauchinnenfolie ist ohne weiteres in der Lage, die ansonsten notwendigen Anforderungen einer Schlauchinnenfolie zu erfüllen, insbesondere:
Durchlässigkeit für UV-Licht zur Härtung des reaktiven Harzes bei Ausführung des Schlauchliners als GfK-Liner,
Bruch erst ab über 100 % Dehnung beim Aufblasversuch,
Mechanische Festigkeit, d.h. definierte, nicht zu große Dehnung bei angelegter Kraft, insbesondere wenn der Schlauchliner mit einer erfindungsgemäßen Schlauchinnenfolie durch den Kanal gezogen wird,
Einbau von Polyamid als Barriere für Monomere wie Styrol,
Insbesondere Möglichkeit der thermisch initiierten Verbindung im Zuge der Linerinstallation mit den (harzgetränkten) Fasern bzw. Faserbändern.

Demgemäß ist die erfindungsgemäße Schlauchinnenfolie vorteilhafterweise zumindest teilweise für UV-Strahlung, d.h. elektromagnetische Strahlung in einem Wellenlängenbereich von 300 bis 450 nm, durchlässig, vorzugsweise zu mindestens 20 %, besonders bevorzugt zu mindestens 40 % und am meisten bevorzugt zu mindestens 50 %. Statt Durchlässigkeit des Lichts sagt man auch Transmission. Gemeint ist hier also elektromagnetische Strahlung, die durch die Folie geht und weder absorbiert noch reflektiert wird. Eine UV-Licht-Quelle kann dann durch die erfindungsgemäße Schlauchinnenfolie hindurch effektiv auf das vorzugsweise mit reaktivem Harz getränkte Trägermaterial bzw. Fasermaterial einwirken, um es auszuhärten.

In einer bevorzugten Ausführungsform ist die erfindungsgemäße Schlauchfolie oder Schlauchinnenfolie nicht nur zumindest teilweise durchlässig für UV-Strahlung, sondern zudem - aus dem gleichen Grund wie oben -zumindest teilweise durchlässig für kurzwelliges, sichtbares Licht (d.h. elektromagnetische Strahlung in einem Wellenlängenbereich von etwa 400 bis 500 nm, vorzugsweise von 400 bis 450 nm), vorzugsweise zu mindestens 20 %, besonders bevorzugt zu mindestens 50 %. Es stellte sich heraus, dass aus der Verbindung der Schlauchinnenfolie bei Verwendung eines Nonwovens, beispielsweise eines Vlieses, praktisch keine nennenswerte Verringerung der UV- bzw. der Lichtdurchlässigkeit resultiert. Indem das (häufig weißliche) Vlies nämlich mit Harz in Kontakt kommt, wird dieses durchsichtig und farblos.

Die außenliegende Flachfolie, die meist ebenfalls zu einer äußeren (in Richtung Kanalwand angeordnet) Schlauchfolie verschweißt oder versiegelt wird, kann ein- oder mehrschichtig sein. Vorzugsweise absorbiert und/oder reflektiert sie UV-Strahlung und/oder kurzwelliges, sichtbares Licht. Die außenliegende Schlauchfolie kann dabei entweder blickdicht oder zumindest kontakttransparent sein, wie in der DE 10 2009 041 841 A beschrieben. Besonders bevorzugt ist die außenliegende Schlauchfolie eine zumindest kontakttransparente UV-Strahlung und/oder kurzwelliges, sichtbares Licht absorbierende und/oder reflektierende Schlauchfolie. Ein solcher außenliegender Schlauch ist ferner in der WO 2010/075946 A1 sowie der DE 10 2010 023 764 A1 beschrieben, wobei dieser außenliegende Schlauch vorzugsweise die dort beschriebenen Inhaltsstoffe und Eigenschaften aufweist.

Die erfindungsgemäße Schlauchfolie oder Schlauchinnenfolie hat zudem bevorzugt eine Barriereschicht.

Vorzugsweise weist die erfindungsgemäße Schlauch(innen)folie eine Sauerstoffbarriereschicht, vorzugsweise eine EVOH-Schicht, eine Wasserdampfbarriereschicht und/oder eine Ölbarriereschicht auf.

Die Erfindung betrifft ebenfalls einen Schlauchliner zum Einbringen in ein unterirdisches Rohr, insbesondere ein Kanalrohr, zu dessen Sanierung. Der Einlegeschlauch umfasst eine flüssigkeitsdichte und Styrol-dichte 2- oder Mehrschichtfolie als innenliegenden Schlauch (Schlauchinnenfolie in Form einer Schlauchfolie) und eine flüssigkeitsdichte und Styrol-dichte außenliegende Schlauchfolie (Schlauchaußenfolie), die zur Rohrwandung weist. Zwischen innen- und außenliegendem Schlauch ist mindestens eine Verstärkungslage, vorzugsweise Glasfasermaterial, vorgesehen, welche vorzugsweise mit einem reaktiven, durch UV-Strahlung aushärtbaren, ungesättigten Harz getränkt ist. Aus diesem getränkten Trägermaterial wird nach der Aushärtung das sanierte Kanalrohr gebildet. Die Schlauchinnenfolie verbleibt nach der Harzaushärtung vorteilhaft im Kanalrohr.

Als Verstärkungslage zwischen außen- und innenliegender Schlauchfolie werden bevorzugt Glasfasergewebe, Glasfaserbänder oder -matten, Synthesefaserfilze (wie z.B. Nadelfilze), Vliese und/oder Nonwoven-Textilfabrikate oder Textilien (wie z.B. Strickschläuche) verwendet, die jeweils mit mindestens einem reaktiven Harz, vorzugsweise jeweils mit mindestens einem ungesättigten Polyesterharz (UP-Harz) und α,ß-ungesättigten Monomeren, wie z. B. Styrol, getränkt sind. Ein entsprechendes Beispiel sind glasfaserverstärkte Kunststoffe (GfK). Als weitere Harze kommen neben den UP-Harzen auch EP- und VE-Harze in Frage. Handelsübliche Harze sind beispielsweise ungesättigte Polyesterharze des Typs 1140 nach Tabelle 3 von DIN 16 946-2 entsprechend der Gruppe 3 in Tabelle 1 von DIN 18 820.

Daher betrifft die Erfindung ein Auskleidungsrohr, das aus einem mehrlagigen Schlauchliner, wie vorsehend beschrieben, erhalten wird, indem der zunächst zusammengefaltete Schlauchliner expandiert und das Reaktionsmaterial unter Einfluss von UV-Strahlung ausgehärtet wurde, wobei sich die Innenfolie mit der mindestens einen Verstärkungslage und Reaktionsmaterial zerstörungsfrei untrennbar verbindet.

Nachstehend wird die vorliegende Erfindung anhand von Beispielen und Figuren näher erläutert, ohne die Erfindung auf diese Ausführungsbeispiele zu beschränken.

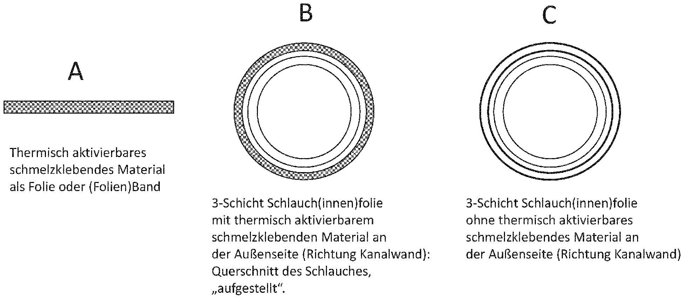

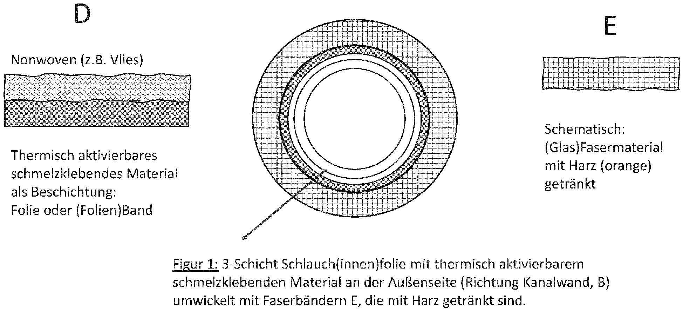

Figur 1 zeigt eine 3-Schicht Schlauchfolie mit thermisch aktivierbarem schmelzklebenden Material an der Außenseite (Richtung Kanalwand, B) umwickelt mit Faserbändern, die mit Harz getränkt sind.

Schnitt A zeigt ein thermisch aktivierbares schmelzklebendes Material, das (ausgeprägte) haftvermittelnde Eigenschaften hat, als Folie oder (Folien)Band. Der Folie oder dem Folienband kann bei Bedarf ein slip- oder ein Antiblockmittel oder ein Slip-Antiblockmittel zugegeben sein, um Verblocken beim Aufwickeln auf einer Rolle zu vermeiden, damit eine bessere Handhabung gegeben ist.

Schnitt B zeigt eine 3-Schicht Schlauchfolie oder Schlauch(innen)folie mit thermisch aktivierbarem schmelzklebenden Material, das (ausgeprägte) haftvermittelnde Eigenschaften hat, an der Außenseite (Richtung Kanalwand):
Querschnitt des Schlauches, "aufgestellt".

Schnitt C zeigt eine 3-Schicht Schlauch(innen)folie ohne thermisch aktivierbares schmelzklebendes Material an der Außenseite (Richtung Kanalwand).

Schnitt D zeigt ein thermisch aktivierbares schmelzklebendes Material, das (ausgeprägte) haftvermittelnde Eigenschaften hat, als Beschichtung eines Nonwovens: Das kann als Folie oder als (Folien)Band für die Erfindung verwendet werden.

Schnitt E zeigt schematisch: (Glas)Fasermaterial mit Harz (nicht-kariert) getränkt.

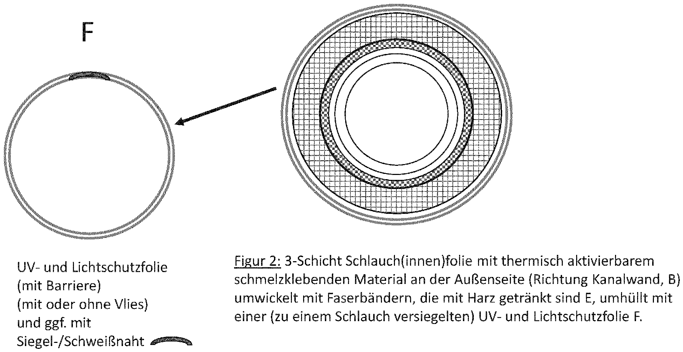

Figur 2 zeigt eine 3-Schicht Schlauch(innen)folie mit thermisch aktivierbarem schmelzklebenden Material, das (ausgeprägte) haftvermittelnde Eigenschaften hat, an der Außenseite (Richtung Kanalwand, B) umwickelt mit Faserbändern, die mit Harz getränkt sind (Schnitt E), umhüllt mit einer (zu einem Schlauch versiegelten) UV- und Lichtschutzfolie (Schnitt F).

Schnitt F zeigt eine UV- und Lichtschutzfolie (mit Barriere, sowie mit oder ohne Vlies) und ggf. mit Siegel-/Schweißnaht.

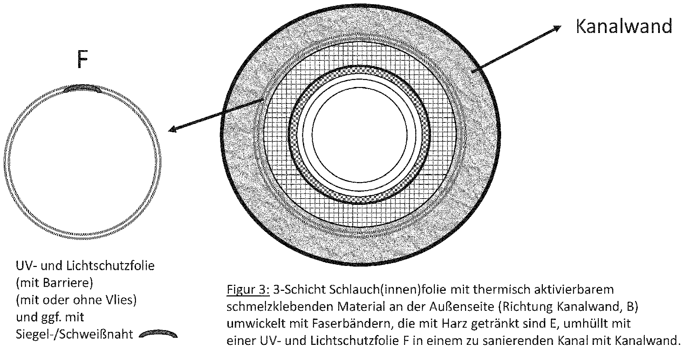

Figur 3 zeigt eine 3-Schicht Schlauch(innen)folie mit thermisch aktivierbarem schmelzklebenden Material, das (ausgeprägte) haftvermittelnde Eigenschaften hat, an der Außenseite (Richtung Kanalwand, B) umwickelt mit Faserbändern, die mit Harz getränkt sind (Schnitt E), umhüllt mit einer UV- und Lichtschutzfolie (Schnitt F) in einem zu sanierenden Kanal mit Kanalwand.

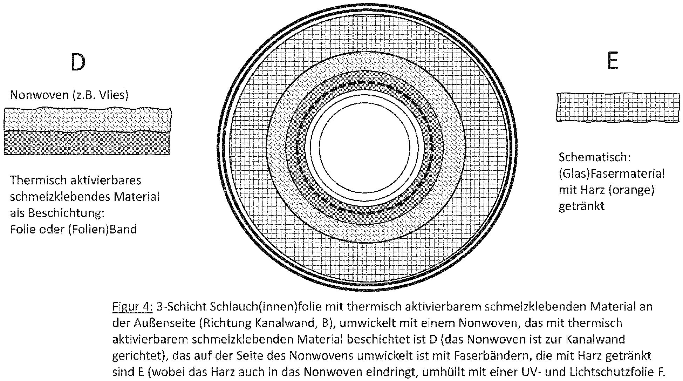

Figur 4 zeigt eine 3-Schicht Schlauch(innen)folie mit thermisch aktivierbarem schmelzklebenden Material, das (ausgeprägte) haftvermittelnde Eigenschaften hat, an der Außenseite (Richtung Kanalwand, B), umwickelt mit einem Nonwoven, das mit thermisch aktivierbarem schmelzklebenden Material beschichtet ist (Schnitt D - das Nonwoven ist zur Kanalwand gerichtet), das auf der Seite des Nonwovens umwickelt ist mit Faserbändern, die mit Harz getränkt sind (Schnitt E - wobei das Harz auch in das Nonwoven eindringt), umhüllt mit einer UV- und Lichtschutzfolie (Schnitt F).

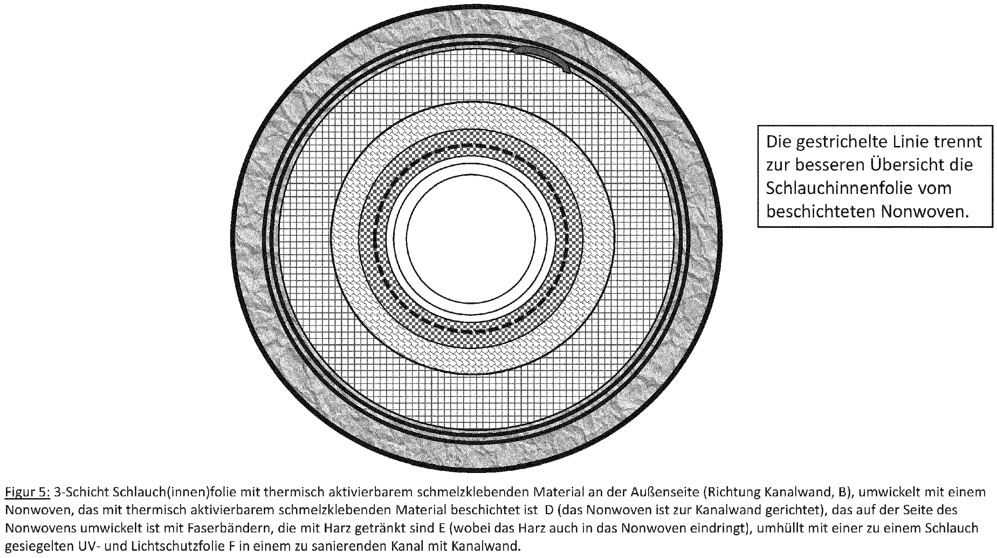

Figur 5 zeigt eine 3-Schicht Schlauch(innen)folie mit thermisch aktivierbarem schmelzklebenden Material, das (ausgeprägte) haftvermittelnde Eigenschaften hat, an der Außenseite (Richtung Kanalwand, B), umwickelt mit einem Nonwoven, das mit einem thermisch aktivierbaren schmelzklebenden Material, das (ausgeprägte) haftvermittelnde Eigenschaften hat, beschichtet ist (Schnitt D - das Nonwoven ist zur Kanalwand gerichtet), das auf der Seite des Nonwovens umwickelt ist mit Faserbändern, die mit Harz getränkt sind (Schnitt E - wobei das Harz auch in das Nonwoven eindringt), umhüllt mit einer zu einem Schlauch gesiegelten UV- und Lichtschutzfolie (Schnitt F) in einem zu sanierenden Kanal mit Kanalwand.

Die fett gestrichelte Linie trennt zur besseren Übersicht die Schlauchinnenfolie vom beschichteten Nonwoven.

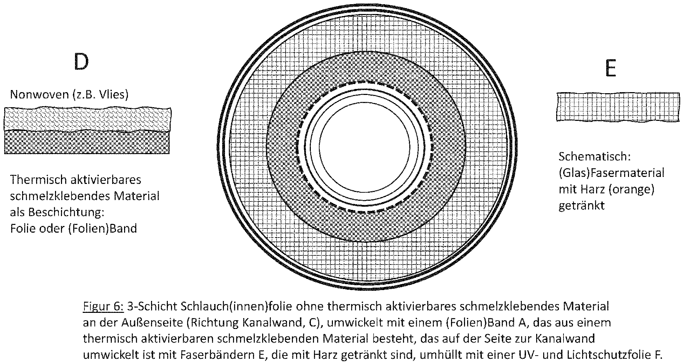

Figur 6 zeigt eine 3-Schicht Schlauch(innen)folie ohne thermisch aktivierbares schmelzklebendes Material an der Außenseite (Richtung Kanalwand, C), umwickelt mit einem (Folien)Band (Schnitt A), das aus einem thermisch aktivierbaren schmelzklebenden Material, das (ausgeprägte) haftvermittelnde Eigenschaften hat, besteht, das auf der Seite zur Kanalwand umwickelt ist mit Faserbändern (Schnitt E), die mit Harz getränkt sind, umhüllt mit einer UV- und Lichtschutzfolie (Schnitt F).

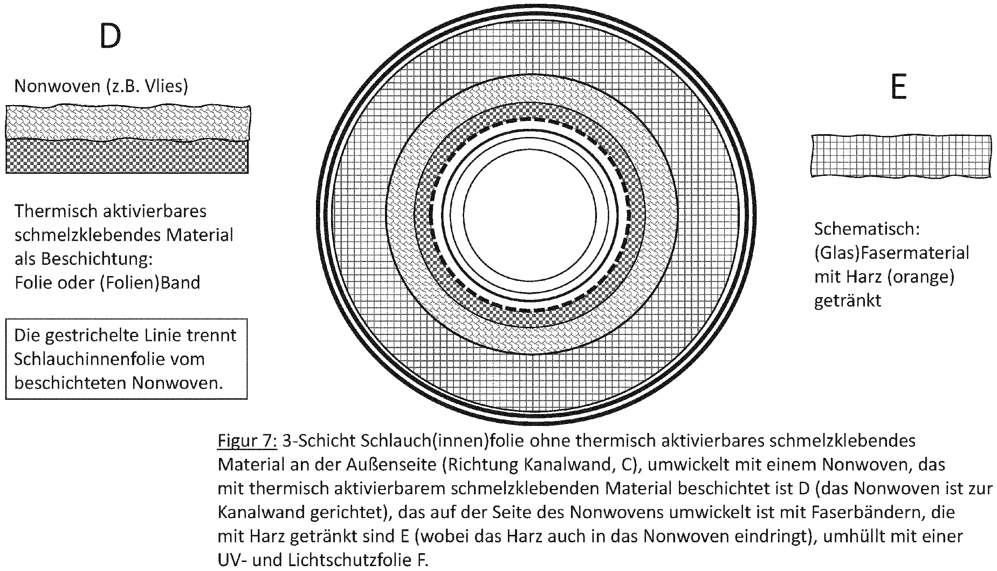

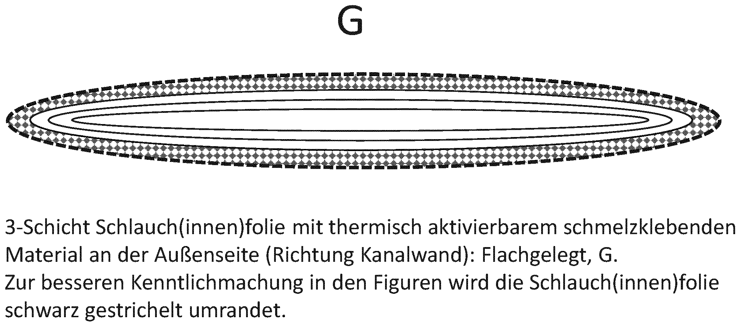

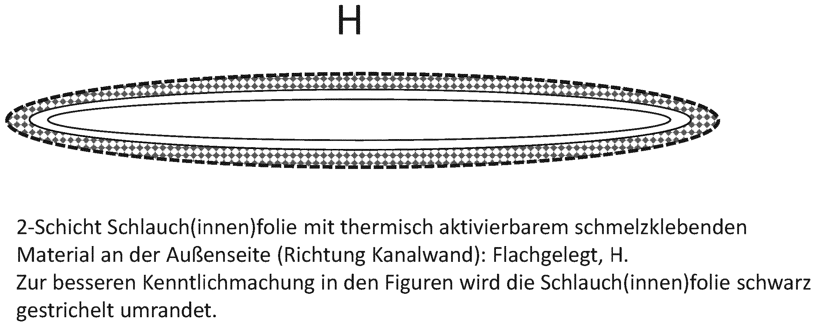

Figur 7 zeigt eine 3-Schicht Schlauch(innen)folie ohne thermisch aktivierbares schmelzklebendes Material an der Außenseite (Richtung Kanalwand, C), umwickelt mit einem Nonwoven, das mit thermisch aktivierbarem schmelzklebenden Material, das (ausgeprägte) haftvermittelnde Eigenschaften hat, beschichtet ist (Schnitt D - das Nonwoven ist zur Kanalwand gerichtet), das auf der Seite des Nonwovens umwickelt ist mit Faserbändern, die mit Harz getränkt sind (Schnitt E - wobei das Harz auch in das Nonwoven eindringt), umhüllt mit einer UV- und Lichtschutzfolie (Schnitt F).

Die gestrichelte Linie trennt zur besseren Übersicht die Schlauchinnenfolie vom beschichteten Nonwoven.

Schnitt G zeigt eine 3-Schicht Schlauch(innen)folie mit thermisch aktivierbarem schmelzklebenden Material, das (ausgeprägte) haftvermittelnde Eigenschaften hat, an der Außenseite (Richtung Kanalwand): Flachgelegt, G. Zur besseren Kenntlichmachung in den Figuren wird die Schlauch(innen)folie schwarz gestrichelt umrandet.

Schnitt H zeigt eine 2-Schicht Schlauch(innen)folie mit thermisch aktivierbarem schmelzklebenden Material, das (ausgeprägte) haftvermittelnde Eigenschaften hat, an der Außenseite (Richtung Kanalwand): Flachgelegt, H. Zur besseren Kenntlichmachung in den Figuren wird die Schlauch(innen)folie schwarz gestrichelt umrandet.

Schnitt I zeigt ein thermisch aktivierbares schmelzklebendes Material, das (ausgeprägte) haftvermittelnde Eigenschaften hat, als Halbschlauchfolie (einseitig geöffneter Schlauch) oder als Flachfolie, die als Halbschlauch angeordnet wurde.

Schnitt J zeigt ein thermisch aktivierbares schmelzklebendes Material, das (ausgeprägte) haftvermittelnde Eigenschaften hat, als Beschichtung auf einem Nonwoven: Anordnung als Halbschlauchfolie (einseitig geöffneter Schlauch) oder als Flachfolie, die zu einem Halbschlauch geformt wurde, J.

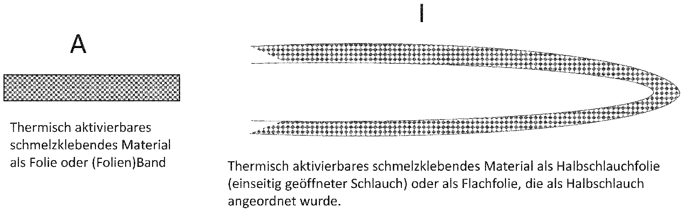

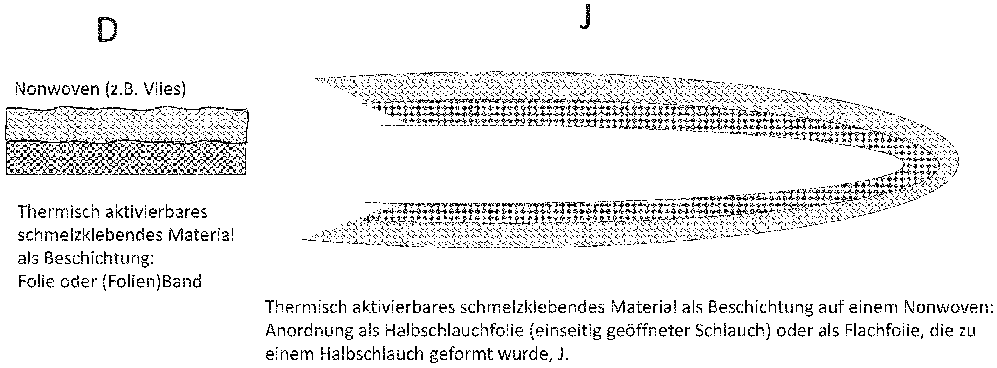

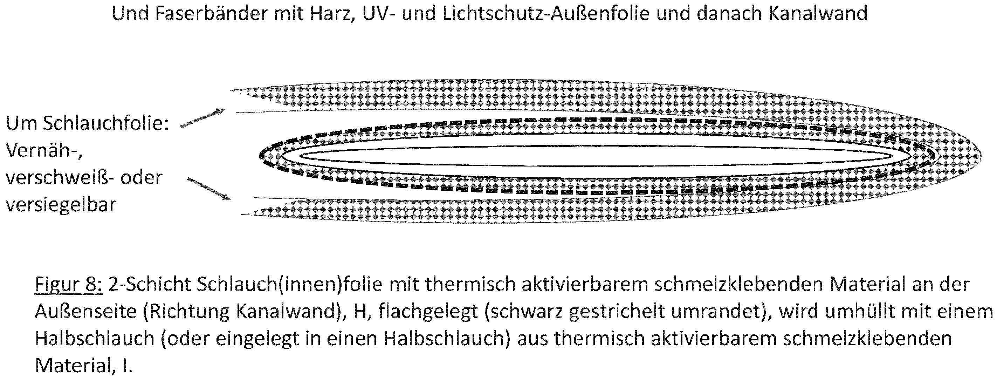

Figur 8 zeigt eine 2-Schicht Schlauch(innen)folie mit thermisch aktivierbarem schmelzklebenden Material, das (ausgeprägte) haftvermittelnde Eigenschaften hat, an der Außenseite (Richtung Kanalwand), H, flachgelegt (schwarz gestrichelt umrandet), dieses wird umhüllt mit einem Halbschlauch (oder es wird eingelegt in einen Halbschlauch) aus thermisch aktivierbarem schmelzklebenden Material, das (ausgeprägte) haftvermittelnde Eigenschaften hat, I.

Der um die Schlauchfolie gelegte Halbschlauch I kann auf der linken Seite entweder vernäht, versiegelt, verklebt oder verschweißt werden, so dass eine Schlauch-in-Schlauch-Anordnung resultiert. Nach außen können sich Faserbänder mit Harz (nach Schnitt E), UV- und Lichtschutz-Außenfolie (nach Schnitt F) anschließen (stellen den gesamten erfindungsgemäßen Schlauchliner dar), und danach kommt die Kanalwand.

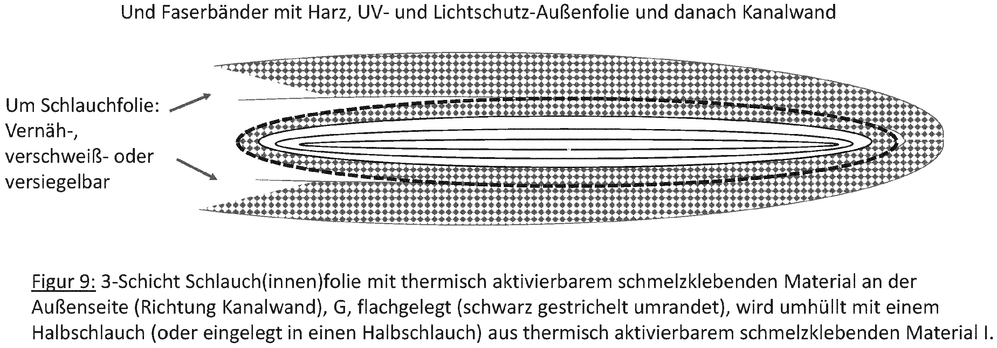

Figur 9 zeigt eine 3-Schicht Schlauch(innen)folie mit thermisch aktivierbarem schmelzklebenden Material, das (ausgeprägte) haftvermittelnde Eigenschaften hat, an der Außenseite (Richtung Kanalwand), G, flachgelegt (schwarz gestrichelt umrandet), diese wird umhüllt mit einem Halbschlauch (oder eingelegt in einen Halbschlauch) aus thermisch aktivierbarem schmelzklebenden Material I. Der um die Schlauchfolie gelegte Halbschlauch I kann auf der linken Seite entweder vernäht, versiegelt, verklebt oder verschweißt werden, so dass eine Schlauch-in-Schlauch-Anordnung resultiert. Nach außen können sich Faserbänder mit Harz (nach Schnitt E), UV- und Lichtschutz-Außenfolie (nach Schnitt F) anschließen (stellen den gesamten erfindungsgemäßen Schlauchliner dar), und danach kommt die Kanalwand.

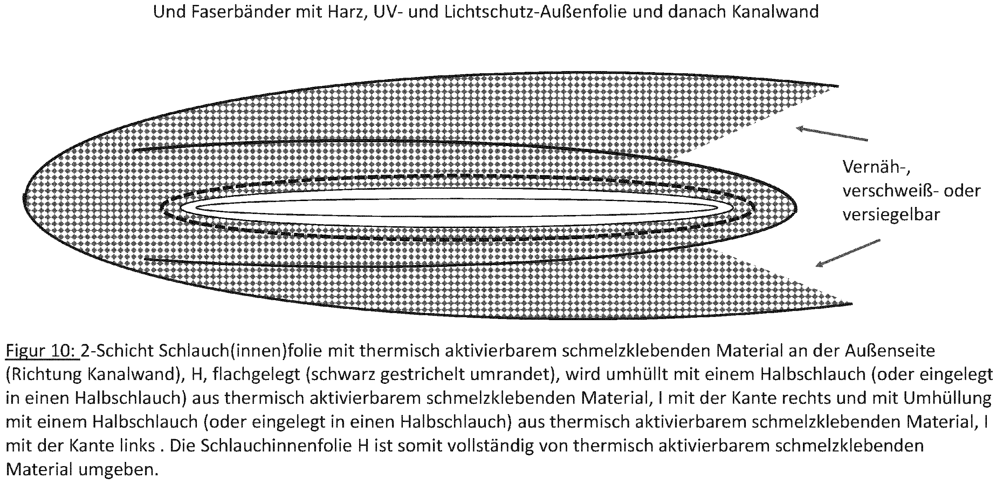

Figur 10 zeigt eine 2-Schicht Schlauch(innen)folie mit thermisch aktivierbarem schmelzklebenden Material, das (ausgeprägte) haftvermittelnde Eigenschaften hat, an der Außenseite (Richtung Kanalwand), H, flachgelegt (schwarz gestrichelt umrandet), diese wird umhüllt mit einem Halbschlauch (oder eingelegt in einen Halbschlauch) aus thermisch aktivierbarem schmelzklebenden Material, I mit der Kante rechts und mit Umhüllung mit einem Halbschlauch (oder eingelegt in einen Halbschlauch) aus thermisch aktivierbarem schmelzklebenden Material, I mit der Kante links. Die Schlauchinnenfolie H ist somit vollständig von thermisch aktivierbarem schmelzklebenden Material, das (ausgeprägte) haftvermittelnde Eigenschaften hat, umgeben.

Die um die Schlauchfolie gelegten Halbschläuche können auf der linken Seite und auf der rechten Seite jeweils entweder vernäht, versiegelt, verklebt oder verschweißt werden, so dass eine Schlauch-in-Schlauch-in-Schlauch-Anordnung resultiert. Nach außen können sich Faserbänder mit Harz (nach Schnitt E), UV- und Lichtschutz-Außenfolie (nach Schnitt F) anschließen (stellen den gesamten erfindungsgemäßen Schlauchliner dar), und danach kommt die Kanalwand.

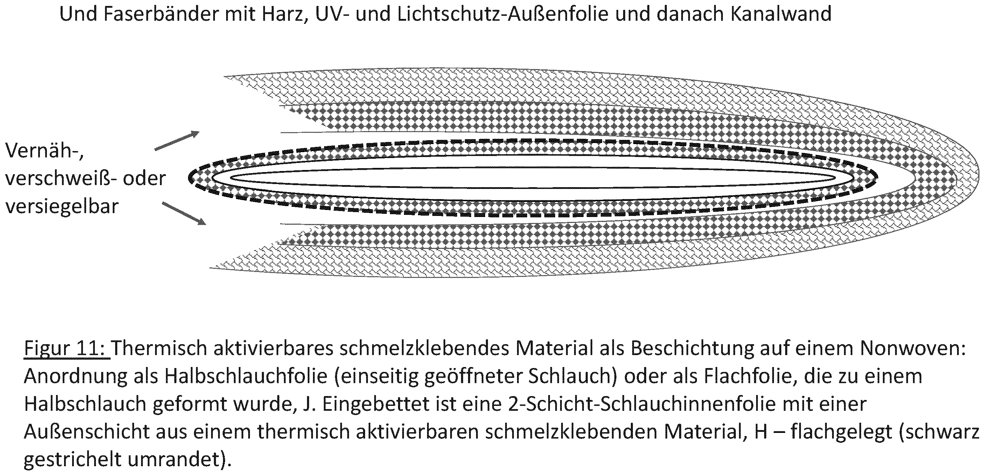

Figur 11: Thermisch aktivierbares schmelzklebendes Material, das (ausgeprägte) haftvermittelnde Eigenschaften hat, als Beschichtung auf einem Nonwoven: Anordnung als Halbschlauchfolie (einseitig geöffneter Schlauch) oder als Flachfolie, die zu einem Halbschlauch geformt wurde, J. Eingebettet ist eine 2-Schicht-Schlauchinnenfolie mit einer Außenschicht aus einem thermisch aktivierbaren schmelzklebenden Material, das (ausgeprägte) haftvermittelnde Eigenschaften hat, H - flachgelegt (schwarz gestrichelt umrandet). Der um die Schlauchfolie gelegte Halbschlauch kann auf der linken Seite entweder vernäht, versiegelt, verklebt oder verschweißt werden, so dass eine Schlauch-in-Schlauch-Anordnung resultiert. Nach außen können sich Faserbänder mit Harz (nach Schnitt E), UV-und Lichtschutz-Außenfolie (nach Schnitt F) anschließen (stellen den gesamten erfindungsgemäßen Schlauchliner dar), und danach kommt die Kanalwand.

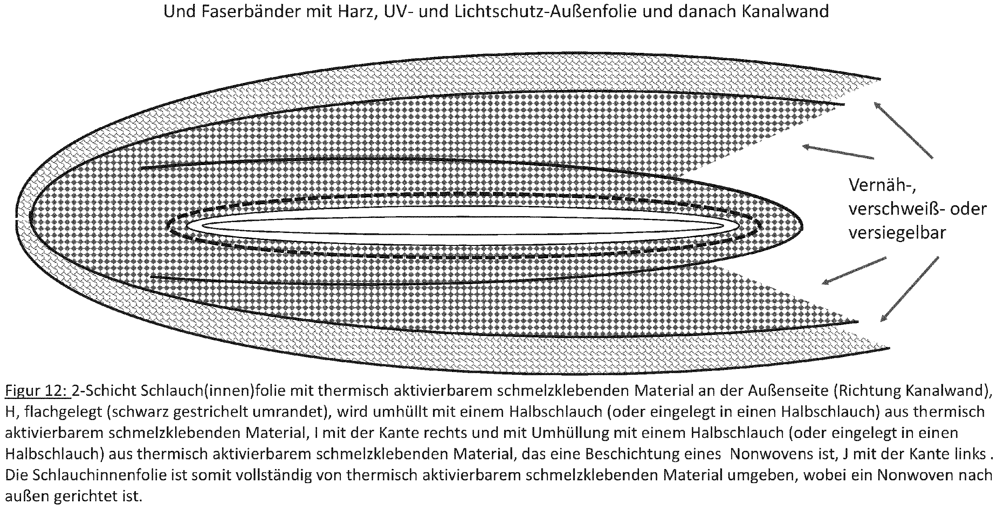

Figur 12 zeigt eine 2-Schicht Schlauch(innen)folie mit thermisch aktivierbarem schmelzklebenden Material, das (ausgeprägte) haftvermittelnde Eigenschaften hat, an der Außenseite (Richtung Kanalwand), H, flachgelegt (schwarz gestrichelt umrandet), diese wird umhüllt mit einem Halbschlauch (oder eingelegt in einen Halbschlauch) aus thermisch aktivierbarem schmelzklebenden Material, das (ausgeprägte) haftvermittelnde Eigenschaften hat, I mit der Kante rechts und mit Umhüllung mit einem Halbschlauch (oder eingelegt in einen Halbschlauch) aus thermisch aktivierbarem schmelzklebenden Material, das eine Beschichtung eines Nonwovens ist, J mit der Kante links. Die Schlauchinnenfolie ist somit vollständig von thermisch aktivierbarem schmelzklebenden Material umgeben, wobei zusätzlich ein Nonwoven nach außen gerichtet ist (um später an das Harz zu gelangen). Die um die Schlauchfolie gelegten Halbschläuche können auf der linken Seite und auf der rechten Seite jeweils entweder vernäht, versiegelt, verklebt oder verschweißt werden, so dass eine Schlauch-in-Schlauch-in-Schlauch-Anordnung resultiert. Nach außen können sich Faserbänder mit Harz (nach Schnitt E), UV- und Lichtschutz-Außenfolie (nach Schnitt F) anschließen (stellen den gesamten erfindungsgemäßen Schlauchliner dar), und danach kommt die Kanalwand.

### Beispiel 1:

Ein exemplarisches Ausführungsbeispiel für eine Schlauchinnenfolie sieht folgendermaßen aus: 5-Schicht Schlauch(innen)folie für die Verwendung in Schlauchlinern zur grabenlosen Kanalsanierung.
wie Schnitt C, nur als 5-Schicht-Folie):

| Schichtnummer | Zusammensetzung | Anteil in Schicht in % | Dicke in µm |
|---|---|---|---|
| 1 | • Lupolen 2420 F | • 70 | 70 |
| Außen zur Wand | • Exceed 1327 CA | • 30 | |
| 2 | • Admer NF498E | • 100 | 10 |
| 3 | • Durethan C38 F | • 100 | 40 |
| 4 | • Admer NF498E | • 100 | 10 |
| 5 | • Lupolen 2420 F | • 70 | 70 |
| Innen zum Medium | • Exceed 1327 CA | • 30 | |
| | | | Summe: |
| | | | 200 µm |

Die oben genannte Mehrschichtfolie beinhaltet auf der Außenseite diejenige Schicht, die im Schlauchliner der harzgetränkten Trägerschicht gegenüberliegt, und besteht aus einer Mischung von Lupolen 2420 F, das ein LDPE der Firma LyondellBasell Polymers ist, und Exceed 1327 CA der Firma ExxonMobil Chemical Company. Letzteres ist ein mittels Metallocen-Katalyse hergestelltes Ethylen-Copolymer ist, bei dessen Polymerisation neben Ethylen Hexen als weiteres Co-Monomer eingesetzt wird.

Ein geeigneter Haftvermittler in den innenliegenden Schichten 2 und 4 ist beispielsweise Admer NF498E, der ein mit Maleinsäureanhydridgruppen modifiziertes LDPE der Firma Mitsui ist. Admer^{®}-Substanzen sind PE-Copolymere mit Maleinsäureanhydrid-Gruppen, die eine große Adhäsion zu PET, EVOH und PA besitzen, während sie sehr gut verarbeitbar sind und eine thermische Stabilität aufweisen, die äquivalent zu gewöhnlichem PE ist.

Durethan B40 FAM (Lanxess) ist ein PA 6 und Durethan C38 F (Lanxess) ist ein Copolyamid mittlerer Viskosität. Als Polyamide (PA) sind prinzipiell handelsübliche Polyamide einsetzbar, z.B. (jeweilige Markennamen in Klammern) der Firmen Lanxess (Durethan, s.o.), BASF (Ultramid), DuPont (Zytel), DSM Engineering Plastics (Akulon, Stanyl), EMS-Chemie (Grilamid, Grivory, Grilon), Evonik (Vestamid, Trogamid), Radici (Radilon, Radiflam, Raditer, Heraform, Heraflex) Rhodia (Technyl,Stabamid), UBE, DSM (Novamid), Atofina (Rilsan).

Zur Herstellung der erfindungsgemäßen Schlauchinnenfolien, oder als Band oder Folienband zum Umwickeln der Schlauchinnenfolie oder als Beschichtungsmittel für ein Nonwoven, das zum Umwickeln oder zum Einhüllen der Schlauchinnenfolie verwendet wird, wurden diese speziellen Polymere als thermisch aktivierbares schmelzklebendes Material, das (ausgeprägte) haftvermittelnde Eigenschaften hat, verwendet:
a) Orevac^{®} 18300 von SK Functional Polymers besteht aus LLDPE als Basispolymer, das mit ca. 0,3 bis 0,6 % Maleinsäureanhydrid gepfropft ("grafted") ist. Der Schmelzindex oder Melt Flow Index MFI liegt bei 2,5 g/10 min bei 190°C und einer Belastung von 2,16 kg (gemäß ASTM D1238 (ISO 1133)). Der Schmelzpunkt ist bei 120°C und die Vicat-Erweichungstemperatur wird mit 85°C genannt. Orevac^{®} 18300 hat eine Dichte von 0,916 g/cm^3.
b) Admer NF911E von Mitsui: Hierbei handelt es sich um eine sogenannte "Weichtype", basierend auf einem Plastomer, mit einer Melt Flow Rate von 2,5 (Belastung 2,16 kg, 10 min, 190°C - ASTM D1238 oder ISO 1133). Das Polymer hat eine Dichte von 0.9 g/cm^3 und einen Vicat-Erweichungspunkt von 74°C. Der Schmelzpunkt liegt bei 97°C. Die haftvermittelnden Eigenschaften gegen Polyamid, EVOH und Polyester PET werden vom Hersteller mit sehr gut angegeben.
c) Als Beschichtung des Nonwovens wurde Bynel^{™} 2022 von DOW verwendet. Dieses hat keine funktionellen Gruppen. Die Dichte liegt hier bei 0,93 g/cm^3. Die Schmelztemperatur ist 87°C. Der Melt Flow Index MFI ist bei 190°Cm 2,16 kg mit 35 g/10 min nach ASTM D1238 (ISO 1133) sehr hoch. Das Polymer hat einen Vicat Erweichungspunkt von 58°C, gemessen nach ASTM D1525 (ISO 306).

### Beispiel 2:

Erfindungsgemäße 5-Schicht-Schlauch(innen)folie mit thermisch aktivierbarem schmelzklebenden Material, das (ausgeprägte) haftvermittelnde Eigenschaften hat, für die Verwendung in Schlauchlinern zur grabenlosen Kanalsanierung (wie Schnitt B, nur als 5-Schicht-Folie):

| Schichtnummer | Zusammensetzung | Anteil in Schicht in % | Dicke in µm |
|---|---|---|---|
| 1 | • Orevac^{®} 18300 | • 100 | 70 |
| Außen zur Wand | | | |
| 2 | • Orevac^{®} 18300 | • 100 | 10 |
| 3 | • Durethan C38 F | • 100 | 40 |
| 4 | • Admer NF498E | • 100 | 10 |
| 5 | • Lupolen 2420 F | • 70 | 70 |
| Innen zum Medium | • Exceed 1327 CA | • 30 | |
| | | | Summe: |
| | | | 200 µm |

### Beispiel 3:

Erfindungsgemäße 3-Schicht-Schlauch(innen)folie mit thermisch aktivierbarem schmelzklebenden Material, das (ausgeprägte) haftvermittelnde Eigenschaften hat, für die Verwendung in Schlauchlinern zur grabenlosen Kanalsanierung. (wie Schnitt B, als 3-Schicht-Folie):

| Schichtnummer | Zusammensetzung | Anteil in Schicht in % | Dicke in µm |
|---|---|---|---|
| 1 | • Orevac^{®} 18300 | • 100 | 120 |
| Außen zur Wand | | | |
| 2 | • Orevac^{®} 18300 | • 100 | 20 |
| 3 | • Durethan C38 F | • 100 | 30 |
| Innen zum Medium | | | |
| | | | Summe: |
| | | | 170 µm |

### Beispiel 4:

Erfindungsgemäße 3-Schicht-Schlauch(innen)folie mit thermisch aktivierbarem schmelzklebenden Material, das (ausgeprägte) haftvermittelnde Eigenschaften hat, für die Verwendung in Schlauchlinern zur grabenlosen Kanalsanierung.
(wie Schnitt B als 3-Schicht-Folie):

| Schichtnummer | Zusammensetzung | Anteil in Schicht in % | Dicke in µm |
|---|---|---|---|
| 1 | • Admer NF 911E | • 100 | 120 |
| Außen zur Wand | | | |
| 2 | • Admer NF 911E | • 100 | 20 |
| 3 | • Durethan C38 F | • 100 | 30 |
| Innen zum Medium | | | |
| | | | Summe: |
| | | | 170 µm |

### Beispiel 5:

Erfindungsgemäße 2-Schicht-Schlauch(innen)folie mit thermisch aktivierbarem schmelzklebenden Material, das (ausgeprägte) haftvermittelnde Eigenschaften hat, für die Verwendung in Schlauchlinern zur grabenlosen Kanalsanierung.
(wie Schnitt H als 2-Schicht-Folie):

| Schichtnummer | Zusammensetzung | Anteil in Schicht in % | Dicke in µm |
|---|---|---|---|
| 1 | • Admer NF 911E | • 100 | 120 |
| Außen zur Wand | | | |
| 2 | • Durethan C38 F | • 100 | 30 |
| Innen zum Medium | | | |
| | | | Summe: |
| | | | 150 µm |

### Beispiel 6:

Erfindungsgemäße 3-Schicht-Schlauch(innen)folie mit thermisch aktivierbarem schmelzklebenden Material, das (ausgeprägte) haftvermittelnde Eigenschaften hat, für die Verwendung in Schlauchlinern zur grabenlosen Kanalsanierung. (analog Schnitt B und Schnitt G, nur mit jeweils 2 Schichten mit thermisch aktivierbarem schmelzklebenden Material):

| Schichtnummer | Zusammensetzung | Anteil in Schicht in % | Dicke in µm |
|---|---|---|---|
| 1 | • Admer NF 911E | • 100 | 120 |
| Außen zur Wand | | | |
| 2 | • Orevac ^{®} 18300 | • 100 | 20 |
| 3 | • Durethan C38 F | • 100 | 30 |
| Innen zum Medium | | | |
| | | | Summe: |
| | | | 170 µm |

### Beispiel 7 (wie Schnitt D):

Beschichtung Polyester-Vlies als Beispiel 7: Als Nonwoven wurde ein sogenanntes "Carded thermobond" Polyester-Vlies der Firma Sandler AG, 95126 Schwarzenbach/Saale, Deutschland verwendet: Sawabond ^{®} 01351-001.

Das Vlies hat eine Grammatur von 80 g/qm und zeichnet sich durch hervorragende Dehneigenschaften in md (machine direction) und in cd-Richtung (cross direction) aus. Das 80 g/qm Vlies wurde mittels Extrusionsbeschichtung mit einem Auftragsgewicht von 40 g/qm mit dem Polymer BynelTM 2022 von DOW beschichtet. Es wurden dem Polymer noch 1 % des Slip-Antiblock-Masterbatches CONSTAB SAB 06569 LD von Constab zugegeben, um Verblocken zu vermeiden und um eine bessere Händelbarkeit beim Abrollen von einer Rolle zu erhalten.

### Beispiel 8 (wie Schnitt A oder wie Schnitt I):

Eine mittels Blasfolienextrusion hergestellte (Mono-)Folie aus Admer NF 911E in einer Breite von 200 mm und einer Dicke von 100 µm. Es wurden dem Polymer noch 3 % des Slip-Antiblock-Masterbatches CONSTAB SAB 06569 LD von Constab zugegeben, um Verblocken zu vermeiden.

### Beispiel 9 (wie Schnitt A oder wie Schnitt I):

Eine mittels Blasfolienextrusion hergestellte (Mono-)Folie aus Orevac^{®} 18300 in einer Breite von 100 mm und einer Dicke von 80 µm.

Beispiel 10: Außenfolie wie Schnitt F: Hier wird die Folie aus EP 2379625 B1, wie dort beschrieben in Beispiel 1 mit einer Dicke von 200 µm verwendet. Diese Folie ist kontakttransparent und hat eine vollständige Blockwirkung gegen UV-Licht und sichtbares Licht im Bereich 300 nm bis ca. 480 nm. Die Transmission für UV-Licht und sichtbares Licht ist in diesem Wellenlängenbereich bei der Außenfolie F unter 0,05 %.

### Herstellung der erfindungsgemäßen Schlauchliner:

### Beispiele 11a und 11b:

Es wird ein Schlauchliner wie folgt hergestellt, in Anlehnung an Figur 6:
Die Schlauchfolie aus Beispiel 1 (ähnlich Schnitt C) wird auf einem Wickeldorn mit einem Folienband aus den Beispielen 8 und 9 (Schnitt A) derart umwickelt, dass eine Schicht aus einem thermisch aktivierbaren schmelzklebenden Material um den Schlauch mit einer Dicke von 200 µm (Variante Beispiel 11a: 2 Lagen der Folie aus Beispiel B8) und 240 µm (Variante Beispiel 11b: 3 Lagen der Folie aus Beispiel B9) resultiert.

Auf die so auf die Schlauchfolie gewickelte Schicht mit dem thermisch aktivierbaren schmelzklebenden Material werden anschließend - ebenfalls mit dem Wickelverfahren, einige Lagen von harzgetränkten (Glas-)Faserbändern (Schnitt E) so lange aufgewickelt, bis sich eine Dicke von 3 mm ergibt. Danach wird der so umwickelte Schlauch mit einer Flachfolie aus Beispiel 10 (gemäß Schnitt F) als Außenfolie verschlossen, wobei die Außenfolie zum Schlauch versiegelt wird. Damit ist der Schlauchliner fertig und einsatzbereit. Dieses Verfahren ist vom Prinzip her der Figur 6 zu entnehmen mit dem Unterschied, dass in diesem Fall eine 5-Schicht Schlauchfolie innen (anstatt einer 3-Schicht-Folie) verwendet wird.

### Beispiel 12:

Hier wird nach den Figuren 2 und 3 verfahren.

Die Schlauchfolie aus Beispiel 2 (ähnlich Schnitt B) wird auf einen Wickeldorn gebracht. Auf die Schlauchfolie mit dem thermisch aktivierbaren schmelzklebenden Material, das (ausgeprägte) haftvermittelnde Eigenschaften hat, außen (in Richtung der späteren Kanalwand) werden anschließend - ebenfalls mit dem Wickelverfahren - einige Lagen von harzgetränkten (Glas-)Faserbändern (Schnitt E) so lange aufgewickelt, bis sich eine Dicke von 4 mm ergibt. Danach wird der so umwickelte Schlauch mit einer Flachfolie aus Beispiel 10 (gemäß Schnitt F) als Außenfolie verschlossen, wobei die Außenfolie schließlich zum Schlauch versiegelt wird. Damit ist der Schlauchliner fertig und einsatzbereit.

Dieses Verfahren ist vom Prinzip her den Figuren 2 und 3 zu entnehmen mit dem Unterschied, dass in diesem Fall eine 5-Schicht Schlauchfolie innen (anstatt einer 3-Schicht-Folie wie in den Figuren 2 und 3) verwendet wird.

### Beispiel 13:

Hier wird nach den Figuren 4 und 5 verfahren.

Die Schlauchfolie aus Beispiel 2 (ähnlich Schnitt B) wird auf einen Wickeldorn gebracht bzw. aufgestrippt. Auf die Schlauchfolie mit dem thermisch aktivierbaren schmelzklebenden Material, das (ausgeprägte) haftvermittelnde Eigenschaften hat, außen (in Richtung der späteren Kanalwand) wird anschließend das beschichtete Nonwoven aus Beispiel 7 (gemäß Schnitt D) einlagig umwickelt (eine leichte Überlappung von bis zu 1 cm war an den Übergangsstellen gegeben). Dazu wurde das beschichtete Nonwoven vorher zu Bändern mit einer Breite von 200 mm geschnitten. Anschließend werden - ebenfalls mit dem Wickelverfahren - einige Lagen von harzgetränkten (Glas-)Faserbändern (gemäß Schnitt E) so lange aufgewickelt, bis sich eine Dicke von 4 mm ergibt. Danach wird der so umwickelte Schlauch mit einer Flachfolie aus Beispiel 10 (gemäß Schnitt F) als Außenfolie verschlossen, wobei die Außenfolie zum Schlauch versiegelt wird. Damit ist der Schlauchliner fertig und einsatzbereit.

Dieses Verfahren ist vom Prinzip her den Figuren 4 und 5 zu entnehmen mit dem Unterschied, dass in diesem Fall eine 5-Schicht Schlauchfolie innen (anstatt einer 3-Schicht-Folie wie in den Figuren 4 und 5) verwendet wird.

### Beispiele 14a (Wickelverfahren) und 14b (Legeverfahren):

Hier wird wieder gemäß Figur 4 oder 5 (Wickelverfahren) oder Figur 12 (Legeverfahren um eine flachgelegte Schlauchfolie) verfahren.

Die Schlauchfolie aus Beispiel 3 (ähnlich Schnitt B oder Schnitt C, oder Schnitt G oder Schnitt H) wird mit dem Wickelverfahren auf einem Wickeldorn mit einem Folienband aus den Beispielen 8 und 9 (Schnitt A) derart umwickelt, dass eine Schicht aus einem thermisch aktivierbaren schmelzklebenden Material, das (ausgeprägte) haftvermittelnde Eigenschaften hat, um den Schlauch mit einer Dicke von 100 µm (1 Lage der Folie aus Beispiel 8) und 80 µm (1 Lage der Folie aus Beispiel 9) resultiert. Alternativ kann um die (flachgelegte) Schlauchfolie aus Beispiel 3 im Legeverfahren auch ein Halbschlauch gemäß Schnitt I passend gelegt werden.

Auf die Schlauchfolie mit dem thermisch aktivierbaren schmelzklebenden Material außen (in Richtung der späteren Kanalwand), das nochmals mit einer Lage aus dem thermisch aktivierbaren schmelzklebenden Material, das (ausgeprägte) haftvermittelnde Eigenschaften hat, umwickelt ist, wird anschließend das beschichtete Nonwoven aus Beispiel 7 (gemäß Schnitt D) im Wickelverfahren einlagig umwickelt (eine leichte Überlappung von bis zu 1 cm war an den Übergangsstellen gegeben). Dazu wurde das beschichtete Nonwoven vorher zu Bändern mit einer Breite von 200 mm geschnitten.

Alternativ dazu wird im Legeverfahren gemäß Figur 12 um den flachgelegten Schlauch, der passend mit einem Halbschlauch bestehend aus dem thermisch aktivierbaren schmelzklebenden Material, das (ausgeprägte) haftvermittelnde Eigenschaften hat, gemäß Schnitt I umhüllt ist, noch ein mit einem thermisch aktivierbaren schmelzklebenden Material, das (ausgeprägte) haftvermittelnde Eigenschaften hat, beschichtetes Nonwoven gemäß Beispiel 7 (und gemäß Schnitt J) gelegt.

Anschließend werden - ebenfalls mit dem Wickelverfahren oder dem Legeverfahren - einige Lagen von harzgetränkten (Glas-)Faserbändern (Schnitt E) oder eine Glasfasermatte so lange aufgewickelt oder umhüllt, bis sich eine Dicke von 4 mm ergibt. Danach wird der so umwickelte Schlauch bzw. der so umhüllte Schlauch mit einer Flachfolie aus Beispiel 10 (gemäß Schnitt F) als Außenfolie verschlossen, wobei die Außenfolie zum Schlauch versiegelt wird. Damit ist der Schlauchliner fertig und einsatzbereit - hergestellt nach dem Wickelverfahren oder alternativ mit dem Legeverfahren.

Dieses Verfahren ist vom Prinzip her den Figuren 4 und 5 zu entnehmen. Das Legeverfahren wurde gemäß Figur 12 durchgeführt, um einen Schlauchliner bereit zu stellen (hier ein Trockenliner, mit dem danach gemäß Beispiel 16 verfahren wird, um einen aushärtbaren Schlauchliner zu erhalten).

### Beispiel 15:

Wie Beispiel 13 nur mit der Schlauchfolie aus Beispiel 4 (gemäß Schnitten G und H). Legeverfahren nach Beispiel 14b.

### Beispiele 16 (Legeverfahren):

Hier wird wieder gemäß Figur 12 (Legeverfahren um eine flachgelegte 2-Schicht-Schlauchfolie) verfahren.

Die Schlauchfolie aus Beispiel 5 (gemäß Schnitt H) wird mit einem Halbschlauch gemäß Schnitt I passend umhüllt, bzw. die Schlauchfolie wird passend in den Halbschlauch gemäß Schnitt I eingelegt. Anschließend wird das offene Ende vernäht und damit verschlossen. Auf die Schlauchfolie mit dem thermisch aktivierbaren schmelzklebenden Material außen (in Richtung der späteren Kanalwand), das nochmals mit einer Lage aus dem thermisch aktivierbaren schmelzklebenden Material, das (ausgeprägte) haftvermittelnde Eigenschaften hat, umwickelt ist und vernäht wurde, wird anschließend das beschichtete Nonwoven aus Beispiel 7 (gemäß Schnitt J) im Legeverfahren gemäß Figur 12 einlagig passend umhüllt. Auch hier wird das offene Ende des offenen Halbschlauchs bestehend aus dem Nonwoven, das mit dem thermisch aktivierbaren schmelzklebenden Material beschichtet ist, vernäht und damit verschlossen. Hier wird also wieder gemäß Figur 12 (Legeverfahren um eine flachgelegte Schlauchfolie) verfahren.

Anschließend wird - ebenfalls mit dem Legeverfahren - der bisherige Verbund mit einer Glasfasermatte derart umhüllt, dass sich eine Dicke von 6 mm ergibt. Danach wird der so umwickelte Schlauch bzw. der so umhüllte Schlauch mit einer Flachfolie aus Beispiel 10 (gemäß Schnitt F) als Außenfolie verschlossen, wobei die Außenfolie zum Schlauch versiegelt wird. Damit ist ein sogenannter "Trockenliner" als Schlauchliner fertig und einsatzbereit - hergestellt nach dem Legeverfahren. Um einen aushärtbaren Schlauchliner zu bekommen, muss der Liner an einigen Stellen aufgeschnitten werden, es muss Harz in die Glasmatte gepumpt werden und das Harz muss homogen in die Glasfasermatte einmassiert und dort verteilt werden. Anschließend wird der Schlauchliner wieder verschlossen, etwa mit einem Tape oder durch Verschweißen der Außenfolie. Hier ist es besonders bevorzugt, wenn die Außenfolie gemäß Beispiel 10 kontakttransparent ist. Das erlaubt die optische Kontrolle der Tränkung (Imprägnierung) der Glasmatten mit dem Harz.

### Beispiel 17:

Die Schlauchfolie aus Beispiel 6 wird mit Bändern aus Beispiel 8 (Schnitt A) umwickelt, so dass eine Wickeldicke von 200 µm resultiert. Anschließend wird einlagig mit einem Band gemäß Beispiel 7 (Schnitt D) umwickelt. Danach wird harzgetränkten Faserbändern (gemäß Schnitt E) umwickelt, so dass sich eine Schicht zu 3 mm ergibt. Es schließt sich die Umhüllung mit der Außenfolie aus Beispiel 10 (gemäß Schnitt F) an. So entsteht ein weiterer Schlauchliner, der in einen schadhaften Kanal zu dessen Sanierung eingebracht werden kann.

Das Verfahren nach Beispiel 17 ähnelt der Figur 4 mit dem Unterschied, dass die Schlauchfolie zudem noch mit Bändern aus dem thermisch aktivierbaren schmelzklebenden Material umwickelt sind (Schnitt A) und danach eben noch mit Bändern beschichteten Nonwovens (Schnitt D), ehe dann mit den harzgetränkten Glasfaserbändern weiter umwickelt wird, um am Ende mit der schützenden Außenfolie verschlossen zu werden.

### Beispiel 18:

### Installation der Schlauchliner

Die Installation der Schlauchliner ist dem Fachmann bekannt. Die Installation wird genauestens überwacht und dokumentiert. Es gibt Einbau-Protokolle, die als Standarddokumentation in den Aushärtefahrzeugen angezeigt werden.

Es werden u.a. folgende Daten dokumentiert:

### Tag/Uhrzeit der Sanierungsdurchführung

Die Sanierungsstrecke in m: Diese kann auch eine Negativstrecke sein. Das kommt daher, wenn die Lichtquelle an den Start der Sanierung verfahren/gezogen wird, welcher vom Überwach-Fahrzeug weiter entfernt liegt.

Aushärtegeschwindigkeit in m/min: Auch hier kann es Negativwerte geben. Die Lichtquelle wird von dem Fahrzeug entfernt, um die Startposition einzunehmen; Positivwerte zeigen an, dass die Sanierung (Aushärtung) läuft.

Temperaturen in °C werden genauestens an verschiedenen Stellen aufgezeichnet. So sind an der Lichtquelle zur UV-Aushärtung positionierte Sensoren (vorn, mittig, hinten), die jeweils die Umgebungstemperatur erfassen. Diese Werte sind stark von der Sauberkeit und der Ausrichtung abhängig, da es sich hierbei um IR-Sensoren handelt.

Der Druck in mbar oder bar ist besonders wichtig, das ist der Innendruck im Linersystem. Mit diesem Druck wird der Schlauchliner an die Kanalwand gepresst.

Lampenstatus; 1 = AUS, 2 = Zündung, 3 = Leistungsaufbau, 4 = Leistung (brennt)

Zudem wird die Anzahl der Lampen dokumentiert und deren jeweilige volle Leistung.

Der Druck zum Aufstellen des Schlauchliners im Zuge der Aushärtung bewegt sich üblicherweise im Bereich 200 mbar bis 2 bar, bevorzugt 300 mbar bis 1 bar und am meisten bevorzugt von 400 mbar bis 800 mbar. Es gilt: Je dicker die Innenfolie, umso höher baut sich der Druck auf, da die Innenfolie zum Aufstellen des Schlauchliners eben unter Druck gesetzt werden muss. Eine dickere Schlauchinnenfolie muss mit höherem Druck expandiert werden. Die Messwerte der Temperaturen sind jedoch nicht als Absolutwerte zu verstehen, die an der Liner-Grenzfläche (also Laminat-Folie) vorliegen.

Messungen an Testlinern zeigen, dass die gemessene Temperatur an der Außenseite des Liners höher liegen kann als die mit der Lichtquelle gemessenen Werte.

Üblicherweise stellen sich im Zuge des exothermen Aushärteprozesses Temperaturen im Bereich 80 bis 140°C, insbesondere 90 bis 130°C und ganz besonders von 100 bis 120°C ein. An der Innenseite des Liners können aber durchaus noch höhere Temperaturen anliegen (etwa bis 170°C, oder sogar bis 195°C). Um die Folien aber nicht zu schädigen, sollten derart hohe Temperaturen, über ca. 140°C, nicht auftreten. Im Rahmen der Erfindung wurden die Materialien so ausgewählt, dass diese thermisch im Bereich 80 bis 130°C, besonders bevorzugt im Bereich 90 bis 120°C im Zuge der Aushärtung des Schlauchliners aktiviert wurden und sich im Zuge der Aushärtung untrennbar fest mit dem ausgehärteten Laminat aus Glasfaser und Harz verbunden haben.

Übliche Geschwindigkeiten, mit denen die UV-Lichtquelle ("Lichterkette") zur Aushärtung durch den Schlauchliner gezogen werden, hängen im Wesentlichen vom Durchmesser des zu sanierenden Kanals und damit vom Durchmesser DN des Schlauchliners ab und bewegen sich im Bereich 0,1 bis 6 m/min, bevorzugt 0,3 bis 3 m/min, am meisten bevorzugt 0,6 bis 2 m/min.

Die Leistung der UV-Lichtquelle ("Lichterkette") ist z.B. 12 mal 400 Watt oder 12 mal 600 Watt. Die Tatsache, dass bei den hier vorgestellten erfindungsgemäßen Schlauchlinern erfindungsgemäß die Schlauchfolie nach dem Aushärten im sanierten Kanal verbleiben kann, hängt also von vielen Faktoren ab, insbesondere aber auch von den Bedingungen der Aushärtung, wie angelegter Druck, bei der Aushärtung herrschende Temperaturen und Aushärtezeit. Wie oben bereits beschrieben, spielt vor allem das im Rahmen dieser Erfindung verwendete thermisch aktivierbare schmelzklebende Material eine besonders wichtige Rolle. Aber nicht nur die Schmelztemperatur dieses Materials ist wichtig, sondern auch dessen Fließfähigkeit in der Wärme bzw. der Schmelze, also der MFI oder die MFR. Zudem spielt die Vicat-Erweichungstemperatur eine sehr wichtige Rolle. Das thermisch aktivierbare schmelzklebende Material, das (ausgeprägte) haftvermittelnde Eigenschaften hat, kann, aber muss keine funktionellen Gruppen tragen. Ebenso stellte sich im Rahmen dieser Erfindung heraus, dass eine Vorbehandlung durchaus hilfreich sein und unterstützend wirkend sein kann, aber auch nicht zwingend erforderlich ist.

### Ergebnisse aus der Installation der Schlauchliner:

Bei allen Beispielen 11 bis 17 konnte nach der Installation die (erfindungsgemäße) Schlauchinnenfolie nicht mehr entfernt werden. Die Schlauchinnenfolie war durch die erfindungsgemäßen Schlauchliner, die zwischen der Schlauch(innen)folie und dem Harz/Glasfasergewebe wenigstens eine Schicht aus einem erfindungsgemäßen thermisch aktivierbaren schmelzklebenden Material aufweisen, das erst im Zuge der Aushärtung aktiviert wird und dann ankleben kann, derart fest mit dem (ausgehärteten) glasfaserverstärkten Kunststoff verbunden, dass eine zerstörungsfreie Trennung oder ein zerstörungsfreies Ablöse unmöglich war.

Insbesondere das Einbringen von Nonwovens oder für Harz und Flüssigkeiten saugfähige Materialien stellte sich als äußerst günstig für die Anknüpfung der Schlauch(innen)folie an das ausgehärtete Laminat (Glas und Harz) dar. Hier erfolgte die Anknüpfung sehr leicht und war vor allem von den Aushärtebedingungen nicht ganz so gravierend beeinflusst, wie im Vergleich zu den Schlauchlinern, bei denen kein Nonwoven verwendet wurde. Mit anderen Worten, verwendet man ein Nonwoven zur Unterstützung der Anknüpfung der Schlauchinnenfolie an das ausgehärtete Laminat aus Harz und Glas (GfK), muss man weitaus weniger penibel auf die passenden Aushärtebedingungen achten. Diese ermöglichen die untrennbare Anknüpfung der Schlauch(innen)folie in einem größeren Temperatur-, einem größeren Zeitfenster oder einem größeren Druckfenster. Die Erklärung dafür liegt auf der Hand: Man kann das Nonwoven oder das für Harz und Flüssigkeiten saugfähige Material ohne Probleme mit dem thermisch aktivierbaren schmelzklebenden Material verbinden, etwa - wie beschrieben - mittels Extrusionskaschierung. Schon diese Verbindung ist derart fest, dass diese zerstörungsfrei nicht mehr getrennt werden kann. Das Nonwoven oder das für Harz und Flüssigkeiten saugfähige Material ist besonders gut geeignet, die Vermittlung zum Harz zu ermöglichen, eben weil das Harz vom Nonwoven aufgesaugt wird und damit nach Aushärtung eine untrennbare Verbindung eingeht.

Die Beschichtung des Nonwovens mit dem thermisch aktivierbaren schmelzklebenden Material, das (ausgeprägte) haftvermittelnde Eigenschaften hat, aktiviert dieses aber auch für die Anknüpfung (auf der anderen Seite, die nicht zu den harzgetränkten Glasfasern geht) derart, dass die untrennbare Verbindung zur Schlauch(innen)folie bewirkt wird. Schon die Schlauchinnenfolie kann durch eine Außenschicht (in Richtung der Kanalwand) mit einem thermisch aktivierbaren schmelzklebenden Material eben, wie der Name schon sagt, "aktiviert" für eine Anknüpfung oder Verklebung über die Temperatur sein. Falls diese "Aktivierung" an der Außenseite der Schlauchinnenfolie aber immer noch nicht ausreichen sollte, kann man die Schlauch(innen)folie durch weiteres Umwickeln oder Umhüllen mit dem thermisch aktivierbaren schmelzklebenden Material noch weiter "aktivieren". Das kann mit einem gleichen oder anderen thermisch aktivierbaren schmelzklebenden Material gelingen.

## Patentansprüche

1. Schlauchliner aufweisend eine Innenfolie und eine Außenfolie und zwischen der Innenfolie und der Außenfolie mindestens eine Verstärkungslage, die ein Verstärkungsmaterial mit einem unter UV-/Licht-Strahlung aushärtbarem Reaktionsmaterial enthält,
**dadurch gekennzeichnet, dass**
zwischen der Innenfolie und der mindestens einen Verstärkungslage mindestens eine Schicht mit einem thermisch aktivierbarbaren, schmelzklebenden Material mit haftvermittelnden Eigenschaften enthalten ist.

2. Schlauchliner nach Anspruch 1, wobei die Verstärkungslage ein für Harz und Flüssigkeiten saugfähiges Material ist, solche wie Glasfaser, Woven oder Nonwoven, insbesondere ein Vlies umfasst.

3. Schlauchliner nach Anspruch 2, wobei das Woven oder Nonwoven die Grammatur 5 bis 10.000 g/qm, insbesondere 20 bis 1.000 g/qm, oder 30 bis 600 g/qm oder 50 bis 400 g/qm aufweist.

4. Schlauchliner nach Anspruch 1, wobei das unter UV-/Licht-Strahlung aushärtbare Reaktionsmaterial mindestens ein reaktives Harz ist, insbesondere ausgewählt aus der Gruppe Polyesterharz, Vinylesterharz oder Epoxidharz.

5. Schlauchliner nach einem der vorherigen Ansprüche, **dadurch gekennzeichnet, dass** die mindestens eine Schicht mit einem thermisch aktivierbarbaren, schmelzklebenden Material mit haftvermittelnden Eigenschaften ein Material ist, das funktionelle Gruppen, insbesondere Säureanhydrid-, Epoxid- oder Alkohol-Gruppen aufweist, insbesondere Maleinsäureanhydrid, Epoxide, Polyalkohole.

6. Schlauchliner nach einem der vorherigen Ansprüche, **dadurch gekennzeichnet, dass** die mindestens eine Schicht mit einem thermisch aktivierbarbaren, schmelzklebenden Material mit haftvermittelnden Eigenschaften ein Material ist, aufweisend einen Schmelzpunkt von 40 bis 160°C, 50 bis 140°C, oder 60 bis 130°C, insbesondere 70 bis 120°C.

7. Schlauchliner nach einem der vorherigen Ansprüche, **dadurch gekennzeichnet, dass** die mindestens eine Schicht mit einem thermisch aktivierbarbaren, schmelzklebenden Material mit haftvermittelnden Eigenschaften ein Material ist, aufweisend einen Melt Flow Index gemäß ASTM D1238 oder ISO 1133 von 0,3 bis 900 g/10 min, insbesondere 1 bis 80 g/10 min oder 3 bis 60 g/10 min oder 4 bis 50 g/10 min (alle bei 190°C und einer Belastung von 2,16 kg).

8. Schlauchliner nach einem der vorherigen Ansprüche, **dadurch gekennzeichnet, dass** die mindestens eine Schicht mit einem thermisch aktivierbarbaren, schmelzklebenden Material mit haftvermittelnden Eigenschaften ein Material ist, aufweisend eine Vicat-Erweichungstemperatur unter 100°C, insbesondere 20 bis 100°C, oder 30 bis 90°C, insbesondere 35 und 80°C, wobei die Vicat-Erweichungstemperatur gemäß DIN EN ISO 306 / ASTM D1525 bestimmt wird.

9. Schlauchliner nach einem der vorherigen Ansprüche, **dadurch gekennzeichnet, dass** die mindestens eine Schicht mit einem thermisch aktivierbarbaren, schmelzklebenden Material mit haftvermittelnden Eigenschaften eine Dicke von 2 bis 5.000 µm, insbesondere von 5 bis 3.000 µm, oder eine Dicke von 10 bis 2.000 µm oder eine Dicke von 20 bis 1.000 µm aufweist.

10. Schlauchliner nach einem der vorherigen Ansprüche, **dadurch gekennzeichnet, dass** die mindestens eine Schicht mit mindestens einem thermisch aktivierbarbaren, schmelzklebenden Material mit haftvermittelnden Eigenschaften mindestens ein Woven, insbesondere Vlies oder Nonwoven zusätzlich enthält.

11. Schlauchliner nach einem der vorherigen Ansprüche, **dadurch gekennzeichnet, dass** die Schlauchinnenfolie auf ihrer Außenseite, die in Richtung der Kanalwand weist, mindestens eine Schicht eines thermisch aktivierbaren, schmelzklebenden Materials mit haftvermittelnden Eigenschaften aufweist.

12. Schlauchliner nach einem der vorherigen Ansprüche, **dadurch gekennzeichnet, dass** sich die Schicht mit mindestens einem thermisch aktivierbarbaren, schmelzklebenden Material mit haftvermittelnden Eigenschaften bei UV-/LichtStrahlung mit der Verstärkungslage verbindet, und die Innenfolie nach Aushärtung nicht mehr ablösbar von der Verstärkungslage ist.

13. Auskleidungsrohr, das aus einem Schlauchliner gemäß einem der vorhergehenden Ansprüche erhalten wird, wobei ein zunächst zusammengefalteter Schlauchliner expandiert und das Reaktionsmaterial unter Einfluss von UV-Strahlung ausgehärtet wird, wobei sich die Innenfolie mit der Verstärkungslage und Reaktionsmaterial zerstörungsfrei untrennbar verbindet.
